# EUROPEAN PATENT SPECIFICATION

(11) **EP 4 525 505 B1**
(45) Date of publication and mention of the grant of the patent: **17.06.2026**
(21) Application number: 23806981.9
(22) Date of filing: 17.05.2023
(51) Int. Cl.: H04L 5/00, H04W 24/02, H04L 1/00, H04W 24/08

(54) **CSI REPORTING METHOD AND APPARATUS, DEVICE, AND STORAGE MEDIUM**
CSI-MELDEVERFAHREN UND -VORRICHTUNG, VORRICHTUNG UND SPEICHERMEDIUM
PROCÉDÉ ET APPAREIL DE RAPPORT DE CSI, DISPOSITIF ET SUPPORT D'ENREGISTREMENT

(30) Priority: 20.05.2022 CN 202210553989
(43) Date of publication of application: 19.03.2025
(73) Proprietor: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CAO, Yuhua, Beijing 100032 (CN); ZUO, Jun, Beijing 100032 (CN); ZHANG, Jiazhen, Beijing 100032 (CN)
(74) Representative: J A Kemp LLP
(86) International application number: PCT/CN2023/094752
(87) International publication number: WO 2023/222030

(56) References cited:
- WO-A1-2021/072657
- WO-A1-2021/189225
- CN-A- 110 035 450
- CN-A- 110 958 636
- CN-A- 111 435 864
- CN-A- 111 818 546
- CN-A- 112 005 572
- CN-A- 115 473 614
- US-A1- 2018 219 664
- US-A1- 2020 304 218
- US-A1- 2023 012 043
- XIAO HAN ET AL: "AI enlightens wireless communication: Analyses, solutions and opportunities on CSI feedback", CHINA COMMUNICATIONS, CHINA INSTITUTE OF COMMUNICATIONS, PISCATAWAY, NJ, USA, vol. 18, no. 11, 30 November 2021 (2021-11-30), pages 104 - 116, XP011890019, ISSN: 1673-5447, [retrieved on 20211130], DOI: 10.23919/JCC.2021.11.008
- MTI: "Non-uniform quantization for differential L1-RSRP measurement", vol. RAN WG1, no. Chengdu, China; 20181008 - 20181012, 28 September 2018 (2018-09-28), XP051518343, Retrieved from the Internet <URL:http://www.3gpp.org/ftp/tsg%5Fran/WG1%5FRL1/TSGR1%5F94b/Docs/R1%2D1810938%2Ezip> [retrieved on 20180928]

## Description

### TECHNICAL FIELD

The present disclosure relates to the technical field of wireless communication, and more particularly to, methods for reporting Channel State Information (CSI), a terminal and a network device.

### BACKGROUND

At present, the CSI may be reported using two reporting manners. The first manner is a normal reporting manner, i.e., when a groupBasedBeamReporting parameter configured by a network device is set to disabled, a terminal reports two or four reference signals. The second manner is a group-based reporting manner, i.e., when the groupBasedBeamReporting parameter configured by the network device is set to enabled, the terminal reports two reference signals for one time. However, the two CSI reporting manners are both inefficient.

US 2018/219664 A1 discloses a method for reporting channel information by a user equipment (UE).

WO 2021/189225 A1 discloses a method for training a machine learning model.

US 2020/304218 A1 discloses an information sending and receiving method and device, a storage medium and a processor.

XIAO HAN ET AL: "AI enlightens wireless communication: Analyses, solutions and opportunities on CSI feedback", CHINA COMMUNICATIONS, CHINA INSTITUTE OF COMMUNICATIONS, PISCATAWAY, NJ, USA, vol. 18, no. 11, 30 November 2021 (2021-11-30), pages 104-116, XP011890019 discloses: a systematic description of the 1st Wireless Communication Artificial Intelligence (AI) Competition (WAIC), which is hosted by IMT-2020(5G) Promotion Group 5G+AI Work Group.

MTI: "Non-uniform quantization for differential L1-RSRP measurement", 3GPP DRAFT; R1-1810938 NON-UNIFORM QUANTIZATION FOR DIFFERENTIAL L1-RSRP MEASUREMENT, 3RD GENERATION PARTNERSHIP PROJECT (3GPP), MOBILE COMPETENCE CENTRE; 650, ROUTE DES LUCIOLES; F-06921 SOPHIA-ANT, vol. RAN WG1, no. Chengdu, China; 20181008 - 20181012 28 September 2018 (2018-09-28), XP051518343, discloses that: differential Ll-RSRP reporting is based on two tables: a 7-bit table for the largest measured value of RSRP and a 4-bit table for the rest.

### SUMMARY

In view of this, embodiments of the present disclosure aim to provide methods for reporting CSI, a terminal and a network device.

The features of the methods and devices according to the present invention are defined in the independent claims, and the preferable features according to the present invention are defined in the dependent claims.

The technical solution in the embodiments of the present disclosure is implemented as follows.

At least one embodiment of the present disclosure provides a method for reporting CSI as set forth in claim 1.

In addition, in at least one embodiment of the present disclosure, the method may further include following operations.

A largest L1-RSRP value or a largest L1-SINR value in the N sets of report quantities is quantized into K bits. Each of L1-RSRP values or L1-SINR values other than the largest L1-RSRP value or the largest L1-SINR value in the N sets of report quantities is a differential L1-RSRP or differential L1-SINR with a reference to the largest L1-RSRP value or the largest L1-SINR value. The differential L1-RSRP or the differential L1-SINR is quantized into P bits, where K and P are both positive integers, and K is greater than P.

In addition, in at least one embodiment of the present disclosure, the CSI report further includes indication information, and the indication information indicates a position information of the largest L1-RSRP value or the largest L1-SINR value in at least one L1-RSRP or L1-SINR included in the N sets of report quantities.

In addition, in at least one embodiment of the present disclosure, the method may further include following operation.

Non-uniform quantization is performed, by a first Artificial Intelligence (AI) module, on L1-RSRP values or L1-SINR values corresponding to respective reference signals in the N sets of report quantities.

In addition, in at least one embodiment of the present disclosure, a total number of bits of non-uniform quantization of the L1-RSRP values or L1-SINR values corresponding to the respective reference signals in the N sets of report quantities is less than a first threshold.

In addition, in at least one embodiment of the present disclosure, the method may further include following operation.

Auxiliary information transmitted by the network device is acquired. The auxiliary information includes the CSI and/or scheduling information.

In addition, in at least one embodiment of the present disclosure, the method may further include following operation.

Information about the first AI module is transmitted to the network device.

In addition, in at least one embodiment of the present disclosure, the method may further include following operation.

Multiple sets of report quantities among M sets of report quantities satisfy a preset condition. A set of report quantities among the multiple sets of report quantities is reserved, and other sets of report quantities than the reserved set of report quantities in the multiple sets of report quantities are excluded from the M sets of report quantities, to obtain the N sets of report quantities, where M is a positive integer, and M is greater than N.

In addition, in at least one embodiment of the present disclosure, the CSI report further includes an index of at least one reference signal in the excluded other sets of report quantities, or the CSI report further includes an L1-RSRP or an L1-SINR corresponding to at least one reference signal in the excluded other sets of report quantities.

In addition, in at least one embodiment of the present disclosure, satisfying the preset condition includes one of the followings.

Indexes of reference signals in every two sets of report quantities in the multiple sets of report quantities are the same or partially the same.

For every two sets of report quantities in the multiple sets of report quantities, a ratio between an L1-RSRP or an L1-SINR corresponding to each reference signal in one of the two sets of report quantities and an L1-RSRP or an L1-SINR corresponding to each reference signal in the other set of report quantities is calculated, to obtain multiple ratios, where each of the multiple ratios is less than a second threshold.

For every two sets of report quantities in the multiple sets of report quantities, a difference between an L1-RSRP or an L1-SINR corresponding to each reference signal in one of the two sets of report quantities and an L1-RSRP or an L1-SINR corresponding to each reference signal in the other set of report quantities is calculated, to obtain multiple difference values, where each of the multiple difference values is less than a third threshold.

An embodiment of the present disclosure provides a method for reporting CSI as set forth in claim 10.

In addition, in at least one embodiment of the present disclosure, the method may further include following operation.

The number N of the sets of report quantities and the first periodicity are configured for the terminal.

In addition, in at least one embodiment of the present disclosure, the CSI report further includes indication information, and the indication information indicates a position information of the largest L1-RSRP value or the largest L1-SINR value in at least one L1-RSRP or L1-SINR included in the N sets of report quantities.

In addition, in at least one embodiment of the present disclosure, the method may further include following operation.

Non-uniform quantized L1-RSRP values or L1-SINR values corresponding to respective reference signals in the N sets of report quantities are restored by a second AI module.

In addition, in at least one embodiment of the present disclosure, a total number of bits of non-uniform quantization of the L1-RSRP values or L1-SINR values corresponding to the respective reference signals in the N sets of report quantities is less than a first threshold.

In addition, in at least one embodiment of the present disclosure, the method may further include following operation.

Auxiliary information is transmitted to the terminal. The auxiliary information includes the CSI and/or scheduling information.

In addition, in at least one embodiment of the present disclosure, the method may further include following operation.

Information about a first AI module is received from the terminal.

In addition, in at least one embodiment of the present disclosure, multiple sets of report quantities among M sets of report quantities satisfy a preset condition.

A set of report quantities among the multiple sets of report quantities is reserved, and other sets of report quantities than the reserved set of report quantities in the multiple sets of report quantities are excluded from the M sets of report quantities, to obtain the N sets of report quantities, where M is a positive integer, and M is greater than N.

In addition, in at least one embodiment of the present disclosure, the CSI report further includes an index of at least one reference signal in the excluded other sets of report quantities.

Alternatively, the CSI report further includes an L1-RSRP or an L1-SINR corresponding to at least one reference signal in the excluded other sets of report quantities.

In addition, in at least one embodiment of the present disclosure, satisfying the preset condition includes one of the followings.

Indexes of reference signals in every two sets of report quantities in the multiple sets of report quantities are the same or partially the same.

For every two sets of report quantities in the multiple sets of report quantities, a ratio between an L1-RSRP or an L1-SINR corresponding to each reference signal in one of the two sets of report quantities and an L1-RSRP or an L1-SINR corresponding to each reference signal in the other set of report quantities is calculated, to obtain multiple ratios, where each of the multiple ratios is less than a second threshold.

For every two sets of report quantities in the multiple sets of report quantities, a difference between an L1-RSRP or an L1-SINR corresponding to each reference signal in one of the two sets of report quantities and an L1-RSRP or an L1-SINR corresponding to each reference signal in the other set of report quantities is calculated, to obtain multiple difference values, where each of the multiple difference values is less than a third threshold.

At least one embodiment of the present disclosure provides a terminal, including a first processor and a first memory configured to store a computer program capable of being executed on the processor.

The first processor is configured to perform operations of any one of the methods at the terminal side when executing the computer program.

At least one embodiment of the present disclosure provides a network device, including a second processor and a second memory configured to store a computer program capable of being executed on the processor.

The second processor is configured to perform operations of any one of the methods at the network device side when executing the computer program.

In the methods and devices for reporting CSI provided by the embodiments of the present disclosure, the CSI report is transmitted to the network device, the CSI report includes N sets of report quantities, and each of the N sets of report quantities includes an index of at least one reference signal and the L1-RSRP or the L1-SINR corresponding to the at least one reference signal, where N represents a number of sets of report quantities configured by the network device, and N is a positive integer. With the technical solution provided by the embodiments of the present disclosure, the terminal may transmit all the reference signals to be reported to the network device for one time in the manner of the sets of report quantities, to reduce the number of times of reporting, thereby improving the efficiency of the CSI reporting.

### BRIEF DESCRIPTION OF THE DRAWINGS

FIG. 1 is a schematic diagram of a terminal reporting two beams for one time in the related art.
FIG. 2 is a first implementation flowchart of a method for reporting CSI according to an embodiment of the present disclosure.
FIG. 3 is a schematic diagram illustrating non-uniform quantization and restoration of L1-RSRP values or L1-SINR values by a terminal and a network device through their respective AI modules according to an embodiment of the present disclosure.
FIG. 4 is a second implementation flowchart of a method for reporting CSI according to an embodiment of the present disclosure.
FIG. 5 is a first schematic structural diagram of an apparatus for reporting CSI according to the present disclosure.
FIG. 6 is a second schematic structural diagram of an apparatus for reporting CSI according to the present disclosure.
FIG. 7 is a schematic structural diagram of a terminal according to an embodiment of the present disclosure.
FIG. 8 is a schematic structural diagram of a network device according to an embodiment of the present disclosure.

### DETAILED DESCRIPTION

The related art is illustrated before the technical solutions in the embodiments of the present disclosure are introduced.

In the related art, in the L1-RSRP-based downlink beam reporting (i.e., the CSI reporting), the CSI reporting is configured by a CSI report configuration (CSI-ReportConfig).

Table 1 is a schematic illustration of reporting beams using two reporting manners in the related art. As shown in Table 1, the two reporting manners include the first manner, i.e., the normal reporting manner, and the second manner, i.e., the group-based reporting manner. In the normal reporting manner, the groupBasedBeamReporting is set to disabled (Disable), and the terminal reports 2 or 4 reference signals. In the group-based reporting manner, the groupBasedBeamReporting is set to enabled (Enable), and two Synchronization Signal Block (SSB) Resource Indicators (SSBRIs) or two Channel State Information Reference Signal (CSI-RS) Resource Indicators (CRIs) are reported for one time. These two SSBRIs/CRIs correspond to two beams that may be received simultaneously. These two CSI reporting manners are both inefficient.

**Table 1**

| reportQuantity | Non-group-based (normal reporting) | Group-based |
|---|---|---|
| ssb-Index-RSRP only | Measuring up to 64 beams. When nrofReportedRS = 1, one L1-RSRP is reported; and L1-RSRPs within a range of [-140, -44] dBm are indicated using 7 bits, with a 1 dB step. | Measuring up to 64 beams. Differential reporting is used, and L1-RSRPs of two SSBs or two CSI-RSs are reported for one time. |
| | | L1-RSRPs within the range of [-140, -44] dBm are indicated using 7 bits, and L1-RSRP differences from the reference signal are indicated using 4 bits. |
| | When nrofReportedRS > 1, differential reporting is used, and up to 4 beams are reported. L1-RSRP differences from the reference signal are indicated using 4 bits, with a 2dB step. | |

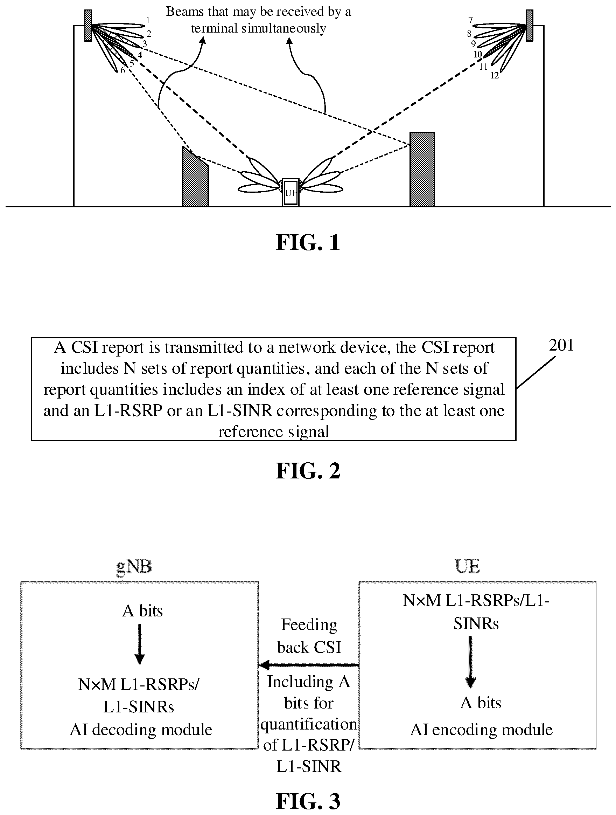

FIG. 1 is a schematic diagram of a terminal reporting two beams for one time in the related art. As shown in FIG. 1, when there exists a multi-panel or a wide beam, a base station may use both of the two beams to transmit services to the terminal, to improve a multi-stream transmission capability of a high-frequency analog beam.

At present, in a design framework of the 5G in the related art, the AI may obtain large gains and thus show considerable application prospects in many fields, such as Demodulation Reference Signal (DMRS) detection, CSI-RS overhead reduction, CSI feedback, beam management, and positioning. The research of the wireless AI may include three major use cases, i.e., the CSI feedback, the beam management, and the positioning, as well as AI model deployment, inference, update, simulation evaluation methods, etc. The typical use case of the beam management includes a beam prediction in time domain and spatial domain for overhead and latency reduction, and a beam selection accuracy improvement. Table 2 is a schematic illustration of the SID of the air interface AI use cases.

**Table 2**

| |
|---|
| -Initial set of use cases includes: |
| CSI feedback enhancement, e.g., overhead reduction, improved accuracy, prediction [RAN1] |
| Beam management, e.g., beam prediction in time, and/or spatial domain for overhead and latency reduction, beam selection accuracy improvement [RAN1] |
| Positioning accuracy enhancements for different scenarios including, e.g., those with heavy Non Line Of Sight (NLOS) conditions [RAN1] |
| -Finalize representative set of use cases (reduced from the initial set and minimizing sub use cases) for characterization and baseline performance evaluations |

In the related art, CSI beam reporting has following technical problems. Firstly, in a framework of the CSI reporting, only up to 4 beams and corresponding L1-RSRPs/L1-SINRs are supported to be reported for each CSI reporting. Secondly, the reported beam indexes and the corresponding L1-RSRPs/L1-SINRs are only based on the CSI-RSs/SSBs transmitted by the base station in a past period of time, which means that it is not possible to report the L1-RSRPs or L1-SINRs in a future period of time. Thirdly, in a high-frequency and medium and high-speed mobile scenario, a time-variation of a channel is large, the beam changes faster, and the probability of beam failure is higher. In order to adapt to this kind of scenario, more frequent beam measurement and beam reporting are required for the framework of the CSI reporting, which brings additional overheads for reference signal and CSI reporting to the base station, and also brings additional overheads for the measurement and reporting to the terminal, and the capacity of the reference signal and the interference on the reference signal in the network will also be tested more severely. Fourthly, in the time series-based L1-RSRP or L1-SINR reporting scheme, SSBRIs/CRIs with a number of nrofTimeDomainBeamReporting (denoted as N) × nrofReportedRS (denoted as M) are required to be fed back in one CSI reporting, and the L1-RSRP/L1-SINR corresponding to each SSBRI/CRI is required to be reported. For the L1-RSRP, the L1-RSRPs within the range of [-140, -44] dBm are indicated using 7 bits, with a step of 1 dB. For the L1-SINR, the L1-SINRs within the range of [-23, 40] dBm are indicated using 7 bits, with a step of 0.5 dB. Since 7×N×M bits are required to carry the L1-RSRPs/L1-SINRs in a single feedback, which may bring large uplink channel overhead to the system, there is an urgent need to address how to use fewer bits to carry the L1-RSRPs/L1-SINRs required for the CSI reporting.

Based on this, in the embodiments of the present disclosure, a terminal transmits a CSI report to a network device, the CSI report includes N sets of report quantities, and each of the N sets of report quantities includes an index of at least one reference signal and an L1-RSRP or an L1-SINR corresponding to the at least one reference signal, where N represents a number of sets of report quantities configured by the network device, and N is a positive integer.

FIG. 2 is an implementation flowchart of a method for reporting CSI according to an embodiment of the present disclosure, and the method is applied to a terminal. As shown in FIG. 2, the method includes operation 201.

In operation 201, a CSI report is transmitted to a network device. The CSI report includes N sets of report quantities, and each of the N sets of report quantities includes an index of at least one reference signal and an L1-RSRP or an L1-SINR corresponding to the at least one reference signal, where N represents a number of sets of report quantities configured by the network device, and N is a positive integer.

It is to be understood that the reference signal includes a beam. The index may be the SSBRI/CRI.

It is to be understood that when the terminal reports multiple reference signals to the network device, the terminal may transmit all the reference signals to be reported to the network device for one time in the form of the sets of report quantities.

For example, it is assumed that N is equal to 2, the first set of report quantities includes an index of one reference signal and an L1-RSRP or L1-SINR corresponding to the reference signal, and the second set of report quantities includes indexes of two reference signals and L1-RSRPs or L1-SINRs corresponding to the two reference signals. The specific forms of the two sets of report quantities may be:
{CRI_0, L1-RSRPO},
{CRI_1, L1-RSRP1, CRI_2, L1-RSRP2};
   or,
{CRI_0, L1-SINRO},
{CRI_1, L1-SINR1, CRI_2, L1-SINR2}.

In a practical application, the terminal may indicate a reference signal to be used by the network device in a future period of time. That is to say, the terminal may predict the reference signals to be used by the network device within multiple fixed periods after a moment when the terminal transmits the CSI report.

Based on this, in an embodiment, a respective slot, to which the at least one reference signal and the L1-RSRP or the L1-SINR corresponding to the at least one reference signal in each of the N sets of report quantities are applied, is determined based on a first periodicity configured by the network device.

Herein, the first periodicity may be a periodicity in time domain for the CSI reporting.

Herein, it is assumed that the periodicity in time domain for the CSI reporting is represented by PeriodofTimeDomainBeamReporting, and the slot, to which at least one reference signal in the i-th set of report quantities is applied, may be determined using i × PeriodofTimeDomainBeamReporting.

For example, it is assumed that there are two sets of report quantities, the first set of report quantities includes an index of one reference signal and an L1-RSRP or L1-SINR corresponding to the reference signal, the second set of report quantities includes indexes of two reference signals and L1-RSRPs or L1-SINRs corresponding to the two reference signals, and the PeriodofTimeDomainBeamReporting = 5 ms, then the slot, to which the reference signal and the L1-RSRP or L1-SINR corresponding to the reference signal in the first set of report quantities are applied, is represented by 1×5 ms=5 ms. That is to say, the reference signal and the corresponding L1-RSRP or L1-SINR in the first set of report quantities are used at the first moment (1×5 ms=5 ms). The slots, to which the two reference signals and the corresponding L1-RSRPs or L1-SINRs in the second set of report quantities are applied, are both represented by 2×5 ms=10 ms. That is to say, the two reference signals and the corresponding L1-RSRPs or L1-SINRs in the second set of report quantities are used at the second moment (2×5 ms=10 ms). The specific forms of the two sets of report quantities may be represented as:
{CRI_0,0, L1-RSRPO},
{CRI_1,1, L1-RSRP1, CRI_1,2, L1-RSRP2};
   or,
{CRI_0,0, L1-SINRO},
{CRI_1,1, L1-SINR1, CRI_1,2, L1-SINR2}.

Herein, CRI_i,j represents a reference signal j at the moment i×PeriodofTimeDomainBeamReporting, where i ∈ {0,..., nrofTimeDomainBeamReporting-1}, and j ∈ {0,..., nrofReportedRS-1}.

It is to be understood that the network device may transmit a CSI reporting configuration to the terminal to configure the number N of the sets of report quantities and the first periodicity for the terminal. The network device may introduce the number N of the sets of report quantities and the first periodicity into the CSI-ReportConfig IE of the Radio Resource Control (RRC) signaling. The number of the sets of report quantities may be represented by the nrofTimeDomainBeamReporting parameter, and the first periodicity may be represented by the PeriodofTimeDomainBeamReporting parameter. The terminal may transmit the N sets of report quantities to the network device in one of the following manners.

The first manner is a normal reporting manner.

Specifically, if the groupBasedBeamReporting parameter introduced into the CSI-ReportConfig IE of the RRC signaling by the network device is set to disabled (Disable), the terminal may report N (nrofTimeDomainBeamReporting) sets of report quantities in a single report, each set of report quantities contains M (nrofReportedRS) SSBRIs/CRIs, and the i-th set of report quantities is applied to the slot at i×PeriodofTimeDomainBeamReporting after the moment when the CSI is reported.

For example, if the groupBasedBeamReporting parameter introduced into the CSI-ReportConfig IE of the RRC signaling by the network device is set to disabled (Disable), the network device configures that nrofTimeDomainBeamReporting = 4 and nrofReportedRS = 2 in the CSI-ReportConfig of the RRC signaling. The four sets of report quantities that may be reported by the terminal may be specifically as follows:
{CRI_0,0, L1-RSRPO, CRI_0,1, L1-RSRP1},
{CRI_1,0, L1-RSRPO, CRI_1,1, L1-RSRP1},
{CRI_2,0, L1-RSRPO, CRI_2,1, L1-RSRP1},
{CRI_3,0, L1-RSRPO, CRI_3,1, L1-RSRP1, CRI_3,2, L1-RSRP2}.

Herein, CRI_i,j represents a reference signal j at the moment i×PeriodofTimeDomainBeamReporting, where i ∈ {O,..., nrofTimeDomainBeamReporting-1}, and j ∈ {0,..., nrofReportedRS-1}.

The second manner is the group-based reporting.

Specifically, if the groupBasedBeamReporting parameter introduced into the CSI-ReportConfig IE of the RRC signaling by the network device is set to enabled (Enable), the terminal may report N (nrofTimeDomainBeamReporting) sets of report quantities in a single report, each set of report quantities contains two SSBRIs/CRIs, and the two SSBRIs/CRIs correspond to two beams that may be received simultaneously. For example, when there exists a multi-panel or a wide beam, the network device such as the base station may use both the two beams to transmit the services to the terminal, thereby improving the multi-stream transmission capability of the high-frequency analog beam.

For example, if the groupBasedBeamReporting parameter introduced into the CSI-ReportConfig IE of the RRC signaling by the network device is set to enabled (Enable), the network device configures that nrofTimeDomainBeamReporting = 2 in the CSI-ReportConfig of the RRC signaling. The two sets of report quantities that may be reported by the terminal may be specifically as follows:
{CRI_0,0, L1-RSRPO, CRI_0,1, L1-RSRP1},
{CRI_1,0, L1-RSRPO, CRI_1,1, L1-RSRP1}.

Herein, CRI_i,j represents a reference signal j at the moment i×PeriodofTimeDomainBeamReporting, where i ∈ {0,..., nrofTimeDomainBeamReporting-1}, and j ∈ {0,..., nrofReportedRS-1}.

How to save the overhead of bits for the reporting is described in the following cases.

In a first case, the overhead of the bits for the reporting is saved through differential quantization.

In a practical application, it is considered that numerical ranges of L1-RSRPs or L1-SINRs corresponding to respective reference signals are different, if the L1-RSRP values or L1-SINR values corresponding to respective reference signals in the N sets of report quantities are quantized into the same bits, the overhead of the bits may be increased. Therefore, the largest L1-RSRP value or the largest L1-SINR value may be selected, and a difference value between each of the remaining L1-RSRP values and the largest L1-RSRP value may be computed; or a difference value between each of the remaining L1-SINR values and the largest L1-SINR value may be computed. In this way, the largest L1-RSRP value or the largest L1-SINR value may be quantized into more bits and the difference values may be quantized into fewer bits.

Based on this, in an embodiment, the method may further include following operations.

A largest L1-RSRP value or a largest L1-SINR value in the N sets of report quantities is quantized into K bits. Each of L1-RSRP values or L1-SINR values other than the largest L1-RSRP value or the largest L1-SINR value in the N sets of report quantities is a differential L1-RSRP or differential L1-SINR with a reference to the largest L1-RSRP value or the largest L1-SINR value. The differential L1-RSRP or the differential L1-SINR is quantized into P bits.

K and P are both positive integers, and K is greater than P.

For example, it is assumed that N is equal to 2, the first set of report quantities includes an index of one reference signal and an L1-RSRP or L1-SINR corresponding to the reference signal, and the second set of report quantities includes indexes of two reference signals and L1-RSRPs or L1-SINRs corresponding to the two reference signals. The two sets of report quantities may be specifically as follows:
{CRI_0, L1-SINRO},
{CRI_1, L1-SINR1, CRI_2, L1-SINR2}.

Herein, it is assumed that the largest L1-SINR value is L1-SINRO, K=7, and P=4. A difference between the L1-SINR1 and the L1-SINRO is computed and a difference between the L1-SINR2 and the L1-SINRO is computed, to obtain two differential L1-SINRs. The L1-SINRO is quantized into 7 bits, for example, 0000111, and the two differential L1-SINRs are both quantized into 4 bits, for example, 0110 and 0101, then two quantized sets of report quantities are obtained.

In a practical application, in order to enable the network device to restore the corresponding L1-RSRP value or L1-SINR value, the terminal may indicate, to the network device, a position information of the largest L1-RSRP value or the largest L1-SINR value in at least one L1-RSRP or L1-SINR included in the N sets of report quantities. In this way, the network device may restore the largest L1-RSRP value or the largest L1-SINR value based on the K bits, and restore the remaining L1-RSRP values or L1-SINR values based on the P bits.

Based on this, in an embodiment, the CSI report further includes indication information, and the indication information indicates a position information of the largest L1-RSRP value or the largest L1-SINR value in at least one L1-RSRP or L1-SINR included in the N sets of report quantities.

For example, it is assumed that the network device configures that nrofTimeDomainBeamReporting = N and nrofReportedRS = M in the CSI-ReportConfig of the RRC signaling. The terminal reports N sets of report quantities, and each of the N sets of report quantities includes M SSBRIs/CRIs and corresponding L1-RSRPs or L1-SINRs. The largest L1-RSRP value or the largest L1-SINR value is quantized into K bits, and the K bits may indicate the L1-RSRP or L1-SINR within a certain range in a unit of dBm. Each of the other (N×M)-1 L1-RSRP values or L1-SINR values is quantized into P bits, and the P bits indicate the difference between the respective L1-RSRP value and the largest L1-RSRP value or indicate the difference between the respective L1-SINR value and the largest L1-SINR value, where P<K.

Furthermore, the terminal indicates, using the indication information (bitmap) having a length of log (N×M), the position information of the largest L1-RSRP value or the largest L1-SINR value in at least one L1-RSRP or L1-SINR included in the N sets of report quantities. In this way, the network device may restore, based on the indication information (bitmap), the largest L1-RSRP value or the largest L1-SINR value based on the K bits, and restore each of the other L1-RSRP values or L1-SINR values based on the P bits.

For example, N×M (N=2, M=4) SSBRIs/CRIs and the corresponding L1-RSRPs/L1-SINRs are required to be reported in a single report. It is assumed that N×M=2×4=8, i.e., eight L1-RSRPs are reported, the largest L1-RSRP value is quantized into 7 bits, which may indicate the L1-RSRP within the range of [-140, -44] dBm, with a step of 1 dB, and the position information of the largest L1-RSRP in the eight L1-RSRPs is indicated using a bitmap having the length of 3 bits. The other seven L1-RSRP values are each quantized into 4 bits, which may indicate the difference between each L1-RSRP value and the largest L1-RSRP value, with a step of 2 dB.

It is assumed that eight L1-SINRs (N×M=2×4=8) are reported, the largest L1-SINR value is quantized into 7 bits, which indicates the L1-SINR within the range of [-23, 40] dBm, with the step of 1 dB, and the position information of the largest L1-SINR in the eight L1-SINRs is indicated using a bitmap having the length of 3 bits. The other seven L1-SINR values are each quantized into 4 bits, which may indicate the difference between each L1-SINR value and the largest L1-SINR value, with the step of 2 dB.

Table 3 is a schematic illustration of saving the overhead of the bits for reporting through the differential quantization. As shown in Table 3, it is assumed that the network device configures the terminal to report the CSI report for N times, and for each time, indexes of M reference signals and L1-RSRPs or L1-SINRs corresponding to the M reference signals are reported. The network device transmits B CSI-RSs or SSBs for each time.

**Table 3**

| | CRI/SSBRI | L1-RSRP/ L1-SINR | Total number of bits | Effects |
|---|---|---|---|---|
| Related art | N×M×log(B) | N×(7+4×(M -1)) | N×M×log(B) +N×(7+4×(M -1)) | First scheme: the base station needs to transmit Reference Signals (RS) for N times, and transmit B RSs for each time. |
| | | | | User Equipment (UE) needs to report the CSI for N times. |
| Related art | N×M×log(B) | N×(7+4×(M -1)) | N×M×log(B) +N×(7+4×(M -1)) | Second scheme: the base station only needs to transmit the RS for one time, and transmits B RSs for one time. |
| | | | | The UE only needs to report the CSI for one time. |
| Differential quantization | N×M×log(B) | log(NM)+K +P× | N×M×log(B) +log(NM)+K | Not only the technical effect of the second scheme in the |
| | | (NM-1) | +P×(NM-1) | related art is included, but also the number of bits occupied by the CSI (L1-RSRP/L1-SINR) can be significantly reduced. |

In a second case, the overhead of the bits for the reporting is saved through the non-uniform quantization.

In a practical application, it is considered that the AI may obtain large gains and thus shows considerable application prospects in many fields, such as the DMRS detection, the CSI-RS overhead reduction, the CSI feedback, the beam management, and the positioning. Therefore, the terminal may be provided with a first AI module, and the first AI module is used to perform the non-uniform quantization on the L1-RSRP values or L1-SINR values corresponding to respective reference signals in the N sets of report quantities. The network device may be provided with a second AI module, and the second AI module is used to restore the non-uniform quantized L1-RSRP values or L1-SINR values corresponding to the respective reference signals in the N sets of report quantities.

Based on this, in an embodiment, the method may further include following operation.

The non-uniform quantization is performed, by the first AI module, on L1-RSRP values or L1-SINR values corresponding to respective reference signals in the N sets of report quantities.

It is to be understood that the non-uniform quantization may refer to quantizing the L1-RSRP values or L1-SINR values corresponding to respective reference signals in the N sets of report quantities into different number of bits.

It is to be understood that the number of bits for quantizing the L1-RSRP values or L1-SINR values may be determined according to the numerical ranges of the L1-RSRP values or the L1-SINR values of respective reference signals. For example, L1-RSRP values or L1-SINR values within a first numerical range are quantized into a first number of bits, L1-RSRP values or L1-SINR values within a second numerical range are quantized into a second number of bits, and so on.

For example, it is assumed that N is equal to 2, the first set of report quantities includes an index of one reference signal and an L1-SINR corresponding to the reference signal, and the second set of report quantities includes indexes of two reference signals and L1-SINRs corresponding to the two reference signals. The two sets of report quantities may be specifically as follows:
{CRI_0, L1-SINRO},
{CRI_1, L1-SINR1, CRI_2, L1-SINR2}.

Herein, a trained quantization algorithm, i.e., the first AI module, is used by the terminal to: determine the number of bits to be used for quantization of the L1-SINRO based on the numerical range of the L1-SINRO, and it is assumed that the number of bits is 7; determine the number of bits to be used for quantization of the L1-SINR1 based on the numerical range of the L1-SINR1, and it is assumed that the number of bits is 4; and determine the number of bits to be used for quantization of the L1-SINR2 based on the numerical range of the L1-SINR2, and it is assumed that the number of bits is 2.

Furthermore, the terminal reports the three non-uniform quantized L1-SINR values to the network device. A trained dequantization algorithm, i.e., the second AI module, is used by the network device to: restore the first L1-SINRO that is quantized into 7 bits, restore the second L1-SINR1 that is quantized into 4 bits, and restore the third L1-SINR2 that is quantized into 2 bits.

In an embodiment, a total number of bits of non-uniform quantization of the L1-RSRP values or L1-SINR values corresponding to the respective reference signals in the N sets of report quantities is less than a first threshold.

For example, the total number of bits of the non-uniform quantization, performed by the terminal through the first AI module, of the L1-RSRP values or L1-SINR values corresponding to N×M reference signals is A bits, and A is less than the first threshold. The value of A may be configured by an RRC signaling transmitted by the network device; or, A is a fixed and determined value.

In a practical application, the terminal may perform, through the first AI module, the non-uniform quantization on the L1-RSRP values or L1-SINR values of respective reference signals in the N sets of report quantities, and transmits the sets of report quantities obtained after the non-uniform quantization to the network device. In this way, the network device may restore, through the second AI module, the non-uniform quantized L1-RSRP values or L1-SINR values of the respective reference signals in the sets of report quantities. In order to ensure that the terminal and the network device use corresponding AI modules, the network device may transmit auxiliary information to the terminal to expect the terminal to select the AI module in combination with the auxiliary information. In this way, the terminal may use the AI module matching the auxiliary information to implement the non-uniform quantization of the L1-RSRP values or L1-SINR values, and the network device may use the AI module matching the auxiliary information to restore the non-uniform quantized L1-RSRP values or L1-SINR values.

Based on this, in an embodiment, the method may further include following operation.

Auxiliary information is acquired from the network device. The auxiliary information includes the CSI and/or scheduling information.

Herein, after acquiring the auxiliary information, the terminal may select an AI module matching the auxiliary information from a preset database, and use the selected AI module matching the auxiliary information as the first AI module.

FIG. 3 is a schematic diagram illustrating non-uniform quantization and restoration of L1-RSRP values or L1-SINR values by a terminal and a network device through respective AI modules. As shown in FIG. 3, the terminal performs the non-uniform quantization on L1-RSRP values or L1-SINR values of N×M reference signals through a trained quantization algorithm, i.e., an AI encoding module. The network device restores the non-uniform quantized L1-RSRP values or L1-SINR values through a trained dequantization algorithm, i.e., an AI decoding module.

For example, it is assumed that the terminal reports two L1-RSRPs or L1-SINRs, the terminal quantizes, through the trained quantization algorithm, i.e., the first AI module, the first L1-RSRP value or first L1-SINR value into 1 bit, and quantizes the second L1-RSRP value or second L1-SINR value into 2 bits. The terminal reports the two non-uniform quantized L1-RSRP values or L1-SINR values to the network device. The network device restores, through the trained dequantization algorithm, i.e., the second AI module, the first L1-RSRP value or L1-SINR value that is quantized into 1 bit, and restores the second L1-RSRP value or L1-SINR value that is quantized into 2 bits.

It is to be understood that the network device may also indicate one or multiple of the AI modules to the terminal based on changes in the channel state and channel load. The multiple AI models have no impact on the process of the non-uniform quantization, but only affect an inference efficiency of the terminal.

It is to be understood that, when indicating the AI module, the network device may further indicate information about the AI module, such as the accuracy, the complexity, and the calculation time of the AI module. In this way, the terminal may select the corresponding first AI module from the preset database according to the information.

In a practical application, the terminal may also independently select the first AI module and transmit information about the selected first AI module to the network device. In this way, the network device uses the second AI module corresponding to the first AI module, to restore the non-uniform quantized L1-RSRP values or L1-SINR values.

Based on this, in an embodiment, the method may further include following operation.

The information about the selected first AI module is transmitted to the network device.

Herein, the terminal may randomly select, from a preset database, an AI module as the first AI module, and transmit the information about the selected first AI module to the network device. The information about the selected first AI module may include, such as the accuracy, the complexity, and the calculation time. Multiple AI modules may be stored in the preset database.

It is to be understood that the terminal may report, according to a state of the terminal, information about one or more AI modules selected by the terminal to the network device through the Media Access Control Control Element (MAC CE) or Uplink Control Information (UCI).

It is to be understood that, after receiving the information about the first AI module transmitted by the terminal, the network device may determine the second AI module matching the first AI module using the information.

It is to be understood that the first AI module may be deployed at the terminal side and the second AI module may be deployed at the network device side. The AI module may specifically be an AI/Machine Learning (ML) training and inference module, and the terminal may also interact training and inference parameters, such as weights of convolutional layers, etc., with the network device.

It is to be noted that in order to ensure that the terminal and the network device use the corresponding AI modules, the terminal may transmit information about the first AI module to the network device, to expect the network device to select the AI module in combination with the information. In this way, the terminal may use the first AI module to implement the non-uniform quantization of the L1-RSRP values or L1-SINR values, and the network device may use the second AI module matching the information to restore the non-uniform quantized L1-RSRP values or L1-SINR values.

Table 4 is a schematic illustration of saving the overhead of the bits for reporting by the terminal through the non-uniform quantization. As shown in Table 4, it is assumed that the network device configures the terminal to report the CSI report for N times, and for each time, indexes of M reference signals and L1-RSRPs or L1-SINRs corresponding to the M reference signals are reported. The network device transmits B CSI-RSs or SSBs for each time.

**Table 4**

| | CRI/SSBRI | L1-RSRP/ L1-SINR | Total number of bits | Effects |
|---|---|---|---|---|
| Related art | N×M×log(B) | N×(7+4×(M -1)) | N×M×log(B) +N×(7+4×(M -1)) | First scheme: the base station needs to transmit RSs for N times, and transmit B RSs for each time. The UE needs to report the CSI for N times. |
| Related art | N×M×log(B) | N×(7+4×(M -1)) | N×M×log(B) +N×(7+4×(M -1)) | Second scheme: the base station only needs to transmit the RSs for one time, and transmits B RSs. The UE only needs to report the CSI for one time. |
| Non-uniform quantization | N×M×log(B) | A | N×M×log(B) +A | Not only the technical effect of the second scheme is included, but also the number of bits occupied by the CSI (L1-RSRP/L1-SINR) can be further reduced. |

In a third case, the overhead of the bits for reporting is saved by reducing the number of reported L1-RSRPs or L1-SINRs.

In a practical application, it is considered that the terminal may predict the reference signals to be used by the network device in a future period of time, if indexes of the predicted reference signals to be used by the network device in multiple fixed periods in the future are the same, only an index of one reference signal and the corresponding L1-RSRP or L1-SINR may be reported for the multiple fixed periods. Alternatively, if L1-RSRP values or L1-SINR values of the predicted reference signals to be used by the network devices in multiple fixed periods in the future are the same, or, if the L1-RSRP values or L1-SINR values of the predicted reference signals to be used by the network devices in the multiple fixed periods in the future are similar, then only the index of one reference signal and the corresponding L1-RSRP or L1-SINR may be reported for the multiple fixed periods. That is to say, the number of reported L1-RSRPs or L1-SINRs may be reduced by performing conditional filtering on the multiple reference signals to be reported in the form of the set of report quantities.

Based on this, in an embodiment, the method may further include following operations.

Multiple sets of report quantities among M sets of report quantities satisfy a preset condition.

A set of report quantities among the multiple sets of report quantities is reserved, and other sets of report quantities than the reserved set of report quantities in the multiple sets of report quantities are excluded from the M sets of report quantities, to obtain the N sets of report quantities.

M is a positive integer, and M is greater than N.

It is to be understood that satisfying the preset condition includes one of the followings.

Indexes of reference signals in every two sets of report quantities in the multiple sets of report quantities are the same or partially the same.

For every two sets of report quantities in the multiple sets of report quantities, a ratio between an L1-RSRP or an L1-SINR corresponding to each reference signal in one of the two sets of report quantities and an L1-RSRP or an L1-SINR corresponding to each reference signal in the other set of report quantities is calculated, to obtain multiple ratios, where each of the multiple ratios is less than a second threshold.

For every two sets of report quantities in the multiple sets of report quantities, a difference between an L1-RSRP or an L1-SINR corresponding to each reference signal in one of the two sets of report quantities and an L1-RSRP or an L1-SINR corresponding to each reference signal in the other set of report quantities is calculated, to obtain multiple difference values, where each of the multiple difference values is less than a third threshold.

In an embodiment, the CSI report further includes an index of at least one reference signal in the excluded other sets of report quantities, or the CSI report further includes an L1-RSRP or an L1-SINR corresponding to at least one reference signal in the excluded other sets of report quantities.

It is to be noted that, in a case where the index of at least one reference signal in an excluded set of report quantities is reported, the index of the at least one reference signal in the excluded set of report quantities may be set to a specific value, and the specific value indicates that an index indicated for the previous moment or an index indicated for the subsequent moment is adopted as the index at this moment. Alternatively, in a case where the L1-RSRP or L1-SINR corresponding to at least one reference signal in an excluded set of report quantities is reported, the L1-RSRP or L1-SINR corresponding to the at least one reference signal in the excluded set of report quantities may be set to a specific value, and the specific value indicates that the L1-RSRP or L1-SINR indicated for the previous moment or the L1-RSRP or L1-SINR indicated for the subsequent moment is adopted as the L1-RSRP or L1-SINR at this moment.

In a first example, the network device configures that nrofTimeDomainBeamReporting = 4 and nrofReportedRS = 2 in the CSI-ReportConfig of the RRC signaling. The four sets of report quantities calculated by the terminal are respectively:
{CRI_0,0, CRI_0,1, L1-SINRO, L1-SINR1},
{CRI_0,0, CRI_0,1, L1-SINRO, L1-SINR1},
{CRI_2,0, CRI_2,1, L1-SINRO, L1-SINR1},
{CRI_3,0, CRI_3,1, L1-SINRO, L1-SINR1}.

Herein, since the indexes of the reference signals in the first set of report quantities are the same as the indexes of the reference signals in the second set of report quantities, one set of report quantities is reserved among the two sets of report quantities, and the other set of report quantities is excluded from the four sets of report quantities. Then, the reported three sets of report quantities may specifically as follows:
{CRI_0,0, CRI_0,1, L1-SINRO, L1-SINR1},
{CRI_2,0, CRI_2,1, L1-SINRO, L1-SINR1},
{CRI_3,0, CRI_3,1, L1-SINRO, L1-SINR1};
   or,
{CRI_0,0, CRI_0,1},
{CRI_0,0, CRI_0,1, L1-SINRO, L1-SINR1},
{CRI_2,0, CRI_2,1, L1-SINRO, L1-SINR1},
{CRI_3,0, CRI_3,1, L1-SINRO, L1-SINR1};
   [**00149]** or,
{CRI_0,0, CRI_0,1, L1-SINRO, L1-SINR1},
{CRI_0,0, CRI_0,1},
{CRI_2,0, CRI_2,1, L1-SINRO, L1-SINR1},
{CRI_3,0, CRI_3,1, L1-SINRO, L1-SINR1};
   or,
{L1-SINRO, L1-SINR1},
{CRI_0,0, CRI_0,1, L1-SINRO, L1-SINR1},
{CRI_2,0, CRI_2,1, L1-SINRO, L1-SINR1},
{CRI_3,0, CRI_3,1, L1-SINRO, L1-SINR1};
   or,
{CRI_0,0, CRI_0,1, L1-SINRO, L1-SINR1},
{L1-SINRO, L1-SINR1},
{CRI_2,0, CRI_2,1, L1-SINRO, L1-SINR1},
{CRI_3,0, CRI_3,1, L1-SINRO, L1-SINR1}.

In a second example, the network device configures that nrofTimeDomainBeamReporting = 4 and nrofReportedRS = 1 in the CSI-ReportConfig of the RRC signaling. The four sets of report quantities calculated by the terminal are respectively:
{CRI_0,0, L1-SINRO},
{CRI_0,0, L1-SINRO},
{CRI_2,0, L1-SINRO},
{CRI_3,0, L1-SINRO}.

Herein, since the index of the reference signal in the first set of report quantities is the same as the index of the reference signal in the second set of report quantities, one set of report quantities is reserved among the two sets of report quantities, and the other set of report quantities is excluded from the four sets of report quantities. Then, the reported three sets of report quantities may specifically as follows:
{CRI_0,0, L1-SINR0},
{CRI_2,0, L1-SINR0},
{CRI_3,0, L1-SINR0};
   or,
{CRI_0,0},
{CRI_0,0, L1-SINR0},
{CRI_2,0, L1-SINR0},
{CRI_3,0, L1-SINR0};
   or,
{L1-SINRO},
{CRI_0,0, L1-SINR0},
{CRI_2,0, L1-SINR0},
{CRI_3,0, L1-SINR0};
   or,
{CRI_0,0, L1-SINR0},
{CRI_0,0},
{CRI_2,0, L1-SINR0},
{CRI_3,0, L1-SINR0};
   or,
{CRI_0,0, L1-SINR0},
{L1-SINRO},
{CRI_2,0, L1-SINR0},
{CRI_3,0, L1-SINR0}.

In a third example, the network device configures that nrofTimeDomainBeamReporting = 4 and nrofReportedRS = 2 in the CSI-ReportConfig of the RRC signaling, and four beam groups calculated by the terminal are respectively:
{CRI_0,0, CRI_0,1, L1-SINRO, L1-SINR1},
{CRI_1,0, CRI 0,1, L1-SINRO, L1-SINR1},
{CRI_2,0, CRI_2,1, L1-SINRO, L1-SINR1},
{CRI_3,0, CRI_3,1, L1-SINRO, L1-SINR1}.

Here, since the indexes of the reference signals in the first set of report quantities are partially the same as the indexes of the reference signals in the second set of report quantities, one set of report quantities is reserved among the two sets of report quantities, and the other set of report quantities is excluded from the four sets of report quantities. Then, the reported three sets of report quantities may specifically as follows:
{CRI_0,0, CRI_0,1, L1-SINR0, L1-SINR1},
{CRI_2,0, CRI_2,1, L1-SINR0, L1-SINR1},
{CRI_3,0, CRI_3,1, L1-SINR0, L1-SINR1};
   or,
{CRI_0,0, CRI_0,1, L1-SINR0, L1-SINR1},
{CRI_1,0, CRI_0,1},
{CRI_2,0, CRI_2,1, L1-SINR0, L1-SINR1},
{CRI_3,0, CRI_3,1, L1-SINR0, L1-SINR1};
   or,
{CRI_0,0, CRI_0,1, L1-SINR0, L1-SINR1},
{L1-SINRO, L1-SINR1},
{CRI_2,0, CRI_2,1, L1-SINR0, L1-SINR1},
{CRI_3,0, CRI_3,1, L1-SINR0, L1-SINR1};
   or,
{CRI_1,0, CRI 0,1, L1-SINR0, L1-SINR1},
{CRI_2,0, CRI_2,1, L1-SINR0, L1-SINR1},
{CRI_3,0, CRI_3,1, L1-SINR0, L1-SINR1};
   or,
{CRI_0,0, CRI_0,1},
{CRI_1,0, CRI 0,1, L1-SINR0, L1-SINR1},
{CRI_2,0, CRI_2,1, L1-SINR0, L1-SINR1},
{CRI_3,0, CRI_3,1, L1-SINR0, L1-SINR1};
   or,
{L1-SINRO, L1-SINR1},
{CRI_1,0, CRI 0,1, L1-SINR0, L1-SINR1},
{CRI_2,0, CRI_2,1, L1-SINR0, L1-SINR1},
{CRI_3,0, CRI_3,1, L1-SINR0, L1-SINR1}.

In a fourth example, the network device configures that nrofTimeDomainBeamReporting = 4 and nrofReportedRS = 2 in the CSI-ReportConfig of the RRC signaling. The four beam groups calculated by the terminal are respectively:
{CRI_0,0, CRI_0,1, L1-SINR0, L1-SINR1},
{CRI_1,0, CRI_1,1, L1-SINR0, L1-SINR1},
{CRI_2,0, CRI_2,1, L1-SINR0, L1-SINR1},
{CRI_3,0, CRI_3,1, L1-SINR0, L1-SINR1}.

Herein, taking the first set of report quantities and the second set of report quantities as an example, the ratio between the L1-SINR of each reference signal in the first set of report quantities and the corresponding L1-SINR of each reference signal in the second sets of report quantities is calculated, to obtain two ratios; or the difference between the L1-SINR of each reference signal in the first set of report quantities and the corresponding L1-SINR of each reference signal in the second sets of report quantities is calculated, to obtain two difference values. If the two ratios are both smaller than the second threshold or the two difference values are both smaller than the third threshold, one set of report quantities is reserved among the two sets of report quantities, and the other set of report quantities is excluded from the four sets of report quantities. The reported three sets of report quantities may specifically as follows:
{CRI_0,0, CRI_0,1, L1-SINR0, L1-SINR1},
{CRI_2,0, CRI_2,1, L1-SINR0, L1-SINR1},
{CRI_3,0, CRI_3,1, L1-SINR0, L1-SINR1};
   or,
{CRI_0,0, CRI_0,1, L1-SINR0, L1-SINR1},
{CRI_1,0, CRI_1,1},
{CRI_2,0, CRI_2,1, L1-SINR0, L1-SINR1},
{CRI_3,0, CRI_3,1, L1-SINR0, L1-SINR1};
   or,
{CRI_0,0, CRI_0,1, L1-SINRO, L1-SINR1},
{L1-SINRO, L1-SINR1},
{CRI_2,0, CRI_2,1, L1-SINRO, L1-SINR1},
{CRI_3,0, CRI_3,1, L1-SINRO, L1-SINR1};
   or,
{CRI_1,0, CRI_1,1, L1-SINRO, L1-SINR1},
{CRI_2,0, CRI_2,1, L1-SINRO, L1-SINR1},
{CRI_3,0, CRI_3,1, L1-SINRO, L1-SINR1};
   or,
{CRI_0,0, CRI_0,1},
{CRI_1,0, CRI_1,1, L1-SINR0, L1-SINR1},
{CRI_2,0, CRI_2,1, L1-SINR0, L1-SINR1},
{CRI_3,0, CRI_3,1, L1-SINR0, L1-SINR1};
   or,
{L1-SINRO, L1-SINR1},
{CRI_1,0, CRI_1,1, L1-SINR0, L1-SINR1},
{CRI_2,0, CRI_2,1, L1-SINR0, L1-SINR1},
{CRI_3,0, CRI_3,1, L1-SINR0, L1-SINR1}.

It is to be noted that, in a case where the index or the L1-RSRP or L1-SINR of at least one reference signal in the excluded set of report quantities is reported, the index of the at least one reference signal in the excluded set of report quantities may be set to a specific value, and the specific value indicates that, an index or an L1-RSRP or L1-SINR indicated for the previous moment, or an index or an L1-RSRP or L1-SINR indicated for the subsequent moment, is adopted as the index or the L1-RSRP or L1-SINR at this moment.

Table 5 is a schematic illustration of saving the overhead of the bits for reporting by the terminal through reducing the number of L1-RSRPs or L1-SINRs to be reported. As shown in Table 5, it is assumed that the network device configures the terminal to report the CSI report for N times, and for each time, the indexes of M reference signals and the L1-RSRPs or L1-SINRs corresponding to the M reference signals are reported. The network device transmits B CSI-RSs or SSBs for each time.

**Table 5**

| | CRI/SSBRI | L1-RSRP/ L1-SINR | Total number of bits | Effects |
|---|---|---|---|---|
| Related art | N×M×log(B) | N×(7+4×(M -1)) | N×M×log(B) +N×(7+4×(M -1)) | First scheme: the base station needs to transmit RSs for N times, and transmit B RSs for |
| | | | | each time. The UE needs to report the CSI for N times. |
| Related art | N×M×log(B) | N×(7+4×(M -1)) | N×M×log(B) +N×(7+4×(M -1)) | Second scheme: the base station only needs to transmit the RSs for one time, and transmits B RSs. The UE only needs to report the CSI for one time. |
| Reducing reported L1-RSRPs or L1-SINRs | N×M×log(B) or P×M×log(B+ 1), P≤N | N×(7+4×(M -1)) or Q×(7+4×(M -1)), Q≤N | N×M×log(B) +Q×(7+4×(M -1)) or P×M×log(B+ 1)+N×(7+4×( M-1)) or P×M×log(B+ 1)+Q×(7+4×( M-1)) | Not only the technical effect of the second scheme is included, but also in the scenario where the change of the beam is not fast, the number of bits occupied by the CSI (CRI/SSBRI and/or L1-RSRPs/L1-SINRs) can be significantly reduced. |

The embodiments of the present disclosure have following advantages.
(1) The terminal may transmit all the reference signals to be reported to the network device for one time in the manner of the sets of report quantities, to reduce the number of times of the reporting, thereby improving the efficiency of the CSI reporting.
(2) The terminal may predict the indexes of the reference signals and the L1-RSRPs or L1-SINRs corresponding to the reference signals to be used by the network device in a future period of time, and report the predicted indexes of the reference signals and the L1-RSRPs or L1-SINRs corresponding to the reference signals to be used by the network device in the future period of time in a single CSI report.
(3) The overhead of bits for reporting the L1-RSRPs or L1-SINRs can be reduced by means of the differential quantization, the non-uniform quantization, and reducing the number of reported L1-RSRPs or L1-SINRs, thereby reducing the overhead for CSI reporting and improving the accuracy of the beam.

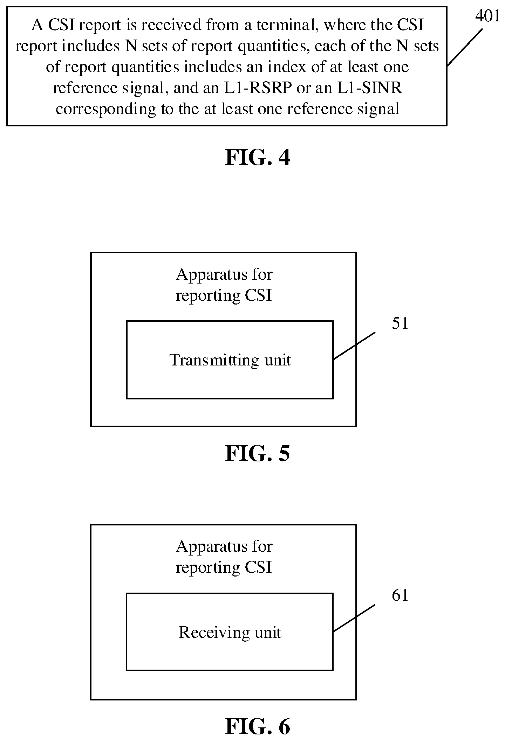

FIG. 4 is an implementation flowchart of a method for reporting CSI according to an embodiment of the present disclosure, and the method is applied to a network device. As shown in FIG. 4, the method includes operation 401.

In operation 401, a CSI report is received from a terminal. The CSI report includes N sets of report quantities, and each of the N sets of report quantities includes an index of at least one reference signal, and an L1-RSRP or an L1-SINR corresponding to the at least one reference signal, where N represents a number of sets of report quantities configured by the network device, and N is a positive integer.

It is to be understood that the reference signal includes a beam. The index may be the SSBRI/CRI.

It is to be understood that when the terminal reports multiple reference signals to the network device, the terminal may transmit all the reference signals to be reported to the network device for one time in the form of the sets of report quantities.

In a practical application, the terminal may indicate a reference signal to be used by the network device in a future period of time. That is to say, the terminal may predict the reference signals to be used by the network device within multiple fixed periods after a moment when the terminal transmits the CSI report.

Based on this, in an embodiment, a respective slot, to which the at least one reference signal and the L1-RSRP or the L1-SINR corresponding to the at least one reference signal in each of the N sets of report quantities are applied, is determined based on a first periodicity configured by the network device.

Herein, the first periodicity may be a periodicity in time domain for the CSI reporting.

In a practical application, the network device may transmit a CSI reporting configuration to the terminal to configure the number N of the sets of report quantities and the first periodicity for the terminal.

Based on this, in an embodiment, the method may further include following operation.

The number N of the sets of report quantities and the first periodicity are configured for the terminal.

In a practical application, it is considered that numerical ranges of L1-RSRPs or L1-SINRs corresponding to respective reference signals are different, if the L1-RSRP values or L1-SINR values corresponding to respective reference signals in the N sets of report quantities are quantized into the same bits, the overhead of the bits may be increased. Therefore, the largest L1-RSRP value or the largest L1-SINR value may be selected by the terminal, and a difference value between each of the remaining L1-RSRP values and the largest L1-RSRP value may be computed; or a difference value between each of the remaining L1-SINR values and the largest L1-SINR value may be computed. In this way, the largest L 1-RSRP value or the largest L1-SINR value may be quantized into more bits and the difference values may be quantized into fewer bits. Furthermore, in order to enable the network device to restore the corresponding L1-RSRP value or L1-SINR value, the terminal may indicate, to the network device, a position information of a reference signal, corresponding to the largest L1-RSRP value or the largest L1-SINR value, in the N sets of report quantities. In this way, the network device may restore the largest L1-RSRP value or the largest L1-SINR value based on the K bits, and restore the remaining L1-RSRP values or L1-SINR values based on the P bits.

Based on this, in an embodiment, the CSI report further includes indication information, and the indication information indicates a position information of the largest L1-RSRP value or the largest L1-SINR value in at least one L1-RSRP or L1-SINR included in the N sets of report quantities.

For example, it is assumed that the network device configures that nrofTimeDomainBeamReporting = N and nrofReportedRS = M in the CSI-ReportConfig of the RRC signaling. The terminal reports N sets of report quantities, and each of the N sets of report quantities includes M SSBRIs/CRIs and corresponding L1-RSRPs or L1-SINRs. The largest L1-RSRP value or the largest L1-SINR value is quantized into K bits, and the K bits may indicate the L1-RSRP or L1-SINR within a certain range in a unit of dBm. Each of the other (N×M)-1 L1-RSRP values or L1-SINR values is quantized into P bits, and the P bits indicate the difference between the respective L1-RSRP value and the largest L1-RSRP value or indicate the difference between the respective L1-SINR value and the largest L1-SINR value, where P<K.

Furthermore, the terminal indicates, using the indication information (bitmap) having a length of log (N×M), the position information of the largest L1-RSRP value or the largest L1-SINR value in at least one L1-RSRP or L1-SINR included in the N sets of report quantities. In this way, the network device may restore, based on the indication information (bitmap), the largest L1-RSRP value or the largest L1-SINR value based on the K bits, and restore each of the other L1-RSRP values or L1-SINR values based on the P bits.

In a practical application, it is considered that the AI may obtain large gains and thus shows considerable application prospects in many fields, such as the DMRS detection, the CSI-RS overhead reduction, the CSI feedback, the beam management, and the positioning. Therefore, the terminal may be provided with a first AI module, and the first AI module is used to perform the non-uniform quantization on the L1-RSRP values or L1-SINR values corresponding to respective reference signals in the N sets of report quantities. The network device may be provided with a second AI module, and the second AI module is used to restore the non-uniform quantized L1-RSRP values or L1-SINR values corresponding to the respective reference signals in the N sets of report quantities.

Based on this, in an embodiment, the method may further include following operation.

Non-uniform quantized L1-RSRP values or L1-SINR values corresponding to respective reference signals in the N sets of report quantities are restored by a second AI module.

For example, it is assumed that N is equal to 2, the first set of report quantities includes an index of one reference signal and an L1-SINR corresponding to the reference signal, and the second set of report quantities includes indexes of two reference signals and L1-SINRs corresponding to the two reference signals. The two sets of report quantities may be specifically as follows:
{CRI_0, L1-SINRO},
{CRI_1, L1-SINR1, CRI_2, L1-SINR2}.

Herein, a trained quantization algorithm, i.e., the first AI module, is used by the terminal to: determine the number of bits to be used for quantization of the L1-SINRO based on the numerical range of the L1-SINRO, and it is assumed that the number of bits is 7; determine the number of bits to be used for quantization of the L1-SINR1 based on the numerical range of the L1-SINR1, and it is assumed that the number of bits is 4; and determine the number of bits to be used for quantization of the L1-SINR2 based on the numerical range of the L1-SINR2, and it is assumed that the number of bits is 2.

Furthermore, the terminal reports the three non-uniform quantized L1-SINR values to the network device. A trained dequantization algorithm, i.e., the second AI module, is used by the network device to: restore the first L1-SINRO that is quantized into 7 bits, restore the second L1-SINR1 that is quantized into 4 bits, and restore the third L1-SINR2 that is quantized into 2 bits.

In an embodiment, a total number of bits of non-uniform quantization of the L1-RSRP values or L1-SINR values corresponding to the respective reference signals in the N sets of report quantities is less than a first threshold.

In a practical application, the terminal may perform, through the first AI module, the non-uniform quantization on the L1-RSRP values or L1-SINR values of respective reference signals in the N sets of report quantities, and transmits the sets of report quantities obtained after the non-uniform quantization to the network device. In this way, the network device may restore, through the second AI module, the non-uniform quantized L1-RSRP values or L1-SINR values of the respective reference signals in the sets of report quantities. In order to ensure that the terminal and the network device use corresponding AI modules, the network device may transmit auxiliary information to the terminal to expect the terminal to select the AI module in combination with the auxiliary information. In this way, the terminal may use the AI module matching the auxiliary information to implement the non-uniform quantization of the L1-RSRP values or L1-SINR values, and the network device may use the AI module matching the auxiliary information to restore the non-uniform quantized L1-RSRP values or L1-SINR values.

Based on this, in an embodiment, the method may further include following operation.

Auxiliary information is transmitted to the terminal, where the auxiliary information includes the CSI and/or scheduling information.

In a practical application, the terminal may also independently select the first AI module and transmit information about the selected first AI module to the network device. In this way, the network device uses the second AI module corresponding to the first AI module, to restore the non-uniform quantized L1-RSRP values or L1-SINR values.

Based on this, in an embodiment, the method may further include following operation.

Information about to the first AI module is received from the terminal.

Herein, the terminal may select, from a preset database, an AI module as the first AI module, and transmit the information about the selected first AI module to the network device. The information about the selected first AI module may include, such as the accuracy, the complexity, and the calculation time. Multiple AI modules may be stored in the preset database.

It is to be noted that in order to ensure that the terminal and the network device use the corresponding AI modules, the terminal may transmit information about the first AI module to the network device, to expect the network device to select the AI module in combination with the information. In this way, the terminal may use the first AI module to implement the non-uniform quantization of the L1-RSRP values or L1-SINR values, and the network device may use the second AI module matching the information to restore the non-uniform quantized L1-RSRP values or L1-SINR values.

In a practical application, it is considered that the terminal may predict the reference signals to be used by the network device in a future period of time, if indexes of the predicted reference signals to be used by the network device in multiple fixed periods in the future are the same, only an index of one reference signal and the corresponding L1-RSRP or L1-SINR may be reported for the multiple fixed periods. Alternatively, if L1-RSRP values or L1-SINR values of the predicted reference signals to be used by the network devices in multiple fixed periods in the future are the same, or, if the L1-RSRP values or L1-SINR values of the predicted reference signals to be used by the network devices in the multiple fixed periods in the future are similar, then only the index of one reference signal and the corresponding L1-RSRP or L1-SINR may be reported for the multiple fixed periods. That is to say, the number of reported L1-RSRPs or L1-SINRs may be reduced by performing conditional filtering on the multiple reference signals to be reported in the form of the set of report quantities.

Based on this, in an embodiment, multiple sets of report quantities among M sets of report quantities satisfy a preset condition. A set of report quantities is reserved among the multiple sets of report quantities, and other sets of report quantities than the reserved set of report quantities in the multiple sets of report quantities are excluded from the M sets of report quantities, to obtain the N sets of report quantities.

M is a positive integer, and M is greater than N.

It is to be understood that satisfying the preset condition includes one of the followings.

Indexes of reference signals in every two sets of report quantities in the multiple sets of report quantities are the same or partially the same.

For every two sets of report quantities in the multiple sets of report quantities, a ratio between an L1-RSRP or an L1-SINR corresponding to each reference signal in one of the two sets of report quantities and an L1-RSRP or an L1-SINR corresponding to each reference signal in the other set of report quantities is calculated, to obtain multiple ratios, where each of the multiple ratios is less than a second threshold.

For every two sets of report quantities in the multiple sets of report quantities, a difference between an L1-RSRP or an L1-SINR corresponding to each reference signal in one of the two sets of report quantities and an L1-RSRP or an L1-SINR corresponding to each reference signal in the other set of report quantities is calculated, to obtain multiple difference values, where each of the multiple difference values is less than a third threshold.

In an embodiment, the CSI report further includes an index of at least one reference signal in the excluded other sets of report quantities, or, the CSI report further includes an L1-RSRP or an L1-SINR corresponding to at least one reference signal in the excluded other sets of report quantities.

It is to be noted that, in a case where the index of at least one reference signal in an excluded set of report quantities is reported, the index of the at least one reference signal in the excluded set of report quantities may be set to a specific value, and the specific value indicates that an index indicated for the previous moment or an index indicated for the subsequent moment is adopted as the index at this moment. Alternatively, in a case where the L1-RSRP or L1-SINR corresponding to at least one reference signal in an excluded set of report quantities is reported, the L1-RSRP or L1-SINR corresponding to the at least one reference signal in the excluded set of report quantities may be set to a specific value, and the specific value indicates that the L1-RSRP or L1-SINR indicated for the previous moment or the L1-RSRP or L1-SINR indicated for the subsequent moment is adopted as the L1-RSRP or L1-SINR at this moment.

The embodiments of the present disclosure have following advantages.
(1) The terminal may transmit all the reference signals to be reported to the network device for one time in the manner of the sets of report quantities, to reduce the number of times of the reporting, thereby improving the efficiency of the CSI reporting.
(2) The terminal may predict the indexes of the reference signals and the L1-RSRPs or L1-SINRs corresponding to the reference signals to be used by the network device in a future period of time, and report the predicted indexes of the reference signals and the L1-RSRPs or L1-SINRs corresponding to the reference signals to be used by the network device in the future period of time in a single CSI report.
(3) The overhead of bits for reporting the L1-RSRPs or L1-SINRs can be reduced by means of the differential quantization, the non-uniform quantization, and reducing the number of reported L1-RSRPs or L1-SINRs, thereby reducing the overhead for CSI reporting and improving the accuracy of the beam.

In order to implement the method for reporting CSI according to the embodiment of the present disclosure, the present disclosure further provides an apparatus for reporting CSI. FIG. 5 is a schematic structural diagram of an apparatus for reporting CSI according to the present disclosure. As shown in FIG. 5, the apparatus includes a transmitting unit 51.

The transmitting unit 51 is configured to transmit a CSI report to a network device. The CSI report includes N sets of report quantities, and each of the N sets of report quantities includes an index of at least one reference signal, and an L1-RSRP or an L1-SINR corresponding to the at least one reference signal.

N represents a number of sets of report quantities configured by the network device, and N is a positive integer.

In the disclosure, a respective slot, to which the at least one reference signal and the L1-RSRP or the L1-SINR corresponding to the at least one reference signal in each of the N sets of report quantities are applied, is determined based on a first periodicity configured by the network device.

In the disclosure, the apparatus is further configured to: quantize a largest L1-RSRP value or a largest L1-SINR value in the N sets of report quantities into K bits; compute each of L1-RSRP values or L1-SINR values other than the largest L1-RSRP value or the largest L1-SINR value in the N sets of report quantities as a differential L1-RSRP or differential L1-SINR with a reference to the largest L1-RSRP value or the largest L1-SINR value; and quantize the differential L1-RSRP or the differential L1-SINR into P bits.

K and P are both positive integers, and K is greater than P.

In the disclosure, the CSI report further includes indication information, and the indication information indicates a position information of the largest L1-RSRP value or the largest L1-SINR value in at least one L1-RSRP or L1-SINR included in the N sets of report quantities.

In the disclosure, the apparatus is further configured to: perform, by the first AI module, non-uniform quantization on L1-RSRP values or L1-SINR values corresponding to respective reference signals in the N sets of report quantities.

Furthermore, in the present disclosure, a total number of bits of non-uniform quantization of the L1-RSRP values or L1-SINR values corresponding to the respective reference signals in the N sets of report quantities is less than a first threshold.

In the disclosure, the apparatus is further configured to: acquire auxiliary information from the network device. The auxiliary information includes the CSI and/or scheduling information.

Furthermore, in the present disclosure, the apparatus is further configured to: transmit information about the first AI module to the network device.

In an embodiment, multiple sets of report quantities among M sets of report quantities satisfy a preset condition, and the apparatus is further configured to: reserve a set of report quantities among the multiple sets of report quantities, and exclude, from the M sets of report quantities, other sets of report quantities than the reserved set of report quantities in the multiple sets of report quantities, to obtain the N sets of report quantities.

M is a positive integer, and M is greater than N.

In the disclosure, the CSI report further includes an index of at least one reference signal in the excluded other sets of report quantities, or, the CSI report further includes an L1-RSRP or an L1-SINR corresponding to at least one reference signal in the excluded other sets of report quantities.

In the disclosure, satisfying the preset condition includes one of the followings.

Indexes of reference signals in every two sets of report quantities in the multiple sets of report quantities are the same or partially the same.

For every two sets of report quantities in the multiple sets of report quantities, a ratio between an L1-RSRP or an L1-SINR corresponding to each reference signal in one of the two sets of report quantities and an L1-RSRP or an L1-SINR corresponding to each reference signal in the other set of report quantities is calculated, to obtain multiple ratios, where each of the multiple ratios is less than a second threshold.

For every two sets of report quantities in the multiple sets of report quantities, a difference between an L1-RSRP or an L1-SINR corresponding to each reference signal in one of the two sets of report quantities and an L1-RSRP or an L1-SINR corresponding to each reference signal in the other set of report quantities is calculated, to obtain multiple difference values, where each of the multiple difference values is less than a third threshold.

In a practical application, the transmitting unit 51 may be implemented by a communication interface in the apparatus for reporting CSI.

It is to be noted that, when the apparatus for reporting CSI performs the CSI reporting, the division of the program modules described above is only used an example. In a practical application, the above processing may be assigned to be completed by different program modules according to actual needs, i.e., an internal structure of the apparatus may be divided into different program modules to complete all or part of the processing described above. In addition, the apparatus for reporting CSI belongs to the same concept as the method for reporting CSI in the embodiment, and the specific implementation process is detailed in the method embodiments, which will not be repeated herein.

In order to implement the method for reporting CSI according to the embodiment of the present disclosure, the present disclosure further provides an apparatus for reporting CSI. FIG. 6 is a schematic structural diagram of an apparatus for reporting CSI according to the present disclosure. As shown in FIG. 6, the apparatus includes a receiving unit 61.

The receiving unit 61 is configured to receive a CSI report from a terminal. the CSI report includes N sets of report quantities, and each of the N sets of report quantities includes an index of at least one reference signal, and an L1-RSRP or an L1-SINR corresponding to the at least one reference signal.

N represents a number of sets of report quantities configured by the network device, and N is a positive integer.

In the disclosure, a respective slot, to which the at least one reference signal and the L1-RSRP or the L1-SINR corresponding to the at least one reference signal in each of the N sets of report quantities are applied, is determined based on a first periodicity configured by the network device.

In the disclosure, the apparatus is further configured to: configure the number N of the sets of report quantities and the first periodicity for the terminal.

In the disclosure, the CSI report further includes indication information, and the indication information indicates a position information of the largest L1-RSRP value or the largest L1-SINR value in at least one L1-RSRP or L1-SINR included in the N sets of report quantities.

In the disclosure, the apparatus is further configured to: restore, by a second AI module, non-uniform quantized L1-RSRP values or L1-SINR values corresponding to respective reference signals in the N sets of report quantities.

In the disclosure, a total number of bits of non-uniform quantization of the L1-RSRP values or L1-SINR values corresponding to the respective reference signals in the N sets of report quantities is less than a first threshold.

In the disclosure, the apparatus is further configured to: transmit auxiliary information to the terminal. The auxiliary information includes the CSI and/or scheduling information.

In the disclosure, the apparatus is further configured to: receive information about to the first AI module from the terminal.

In the disclosure, multiple sets of report quantities among M sets of report quantities satisfy a preset condition, and the apparatus is further configured to: reserve a set of report quantities among the multiple sets of report quantities, and exclude, from the M sets of report quantities, other sets of report quantities than the reserved set of report quantities in the multiple sets of report quantities, to obtain the N sets of report quantities, where M is a positive integer, and M is greater than N.

In the disclosure, the CSI report further includes an index of at least one reference signal in the excluded other sets of report quantities; or, the CSI report further includes an L1-RSRP or an L1-SINR corresponding to at least one reference signal in the excluded other sets of report quantities.

In the disclosure, satisfying the preset condition includes one of the followings.

Indexes of reference signals in every two sets of report quantities in the multiple sets of report quantities are the same or partially the same.

For every two sets of report quantities in the multiple sets of report quantities, a ratio between an L1-RSRP or an L1-SINR corresponding to each reference signal in one of the two sets of report quantities and an L1-RSRP or an L1-SINR corresponding to each reference signal in the other set of report quantities is calculated, to obtain multiple ratios, where each of the multiple ratios is less than a second threshold.

For every two sets of report quantities in the multiple sets of report quantities, a difference between an L1-RSRP or an L1-SINR corresponding to each reference signal in one of the two sets of report quantities and an L1-RSRP or an L1-SINR corresponding to each reference signal in the other set of report quantities is calculated, to obtain multiple difference values, where each of the multiple difference values is less than a third threshold.

In a practical application, the receiving unit 61 may be implemented by a communication interface in the apparatus for reporting CSI.

It is to be noted that, when the apparatus for reporting CSI performs the CSI reporting, the division of the program modules described above is only used an example. In a practical application, the above processing may be assigned to be completed by different program modules according to actual needs, i.e., an internal structure of the apparatus may be divided into different program modules to complete all or part of the processing described above. In addition, the apparatus for reporting CSI belongs to the same concept as the method for reporting CSI in the embodiment, and the specific implementation process is detailed in the method embodiments, which will not be repeated herein.

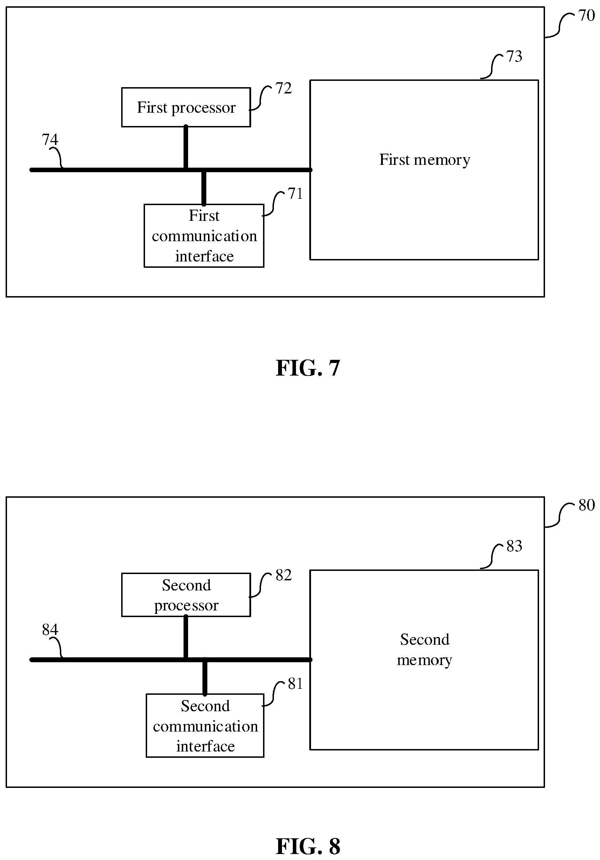

An embodiment of the present disclosure further provides a terminal. As shown in FIG. 7, the terminal includes a first communication interface 71, a first processor 72 and a first memory 73.

The first communication interface 71 is capable of exchanging information with other devices.

The first processor 72 is connected to the first communication interface 71, and is configured to perform the methods provided by one or more technical solutions at the terminal side when executing a computer program. The computer program is stored on the first memory 73.

It is to be noted that the specific processing procedures of the first processor 72 and the first communication interface 71 are described in detail in the method embodiment, which will not be repeated herein.

In a practical application, the various components in the terminal 70 are coupled together through a bus system 74. It is to be understood that the bus system 74 is used for implementing connection and communication between these components. The bus system 74 includes a power bus, a control bus, and a status signal bus, in addition to a data bus. However, for clarity of illustration, the various buses are designated as the bus system 74 in FIG. 7.

The first memory 73 in the embodiment of the present disclosure is used for storing various types of data to support the operations of the terminal 70. Examples of such data include any computer program for operation on the terminal 70.

The methods disclosed in the above embodiments of the present disclosure may be applied to or implemented by the first processor 72. The first processor 72 may be an integrated circuit chip with a signal processing capability. In the implementation, steps of the above methods can be completed by integrated logic circuit in the form of hardware in the first processor 72 or by instructions in the form of software. The first processor 72 may be a general purpose processor, a Digital Signal Processor (DSP), or other programmable logic devices, discrete gate or transistor logic devices, or a discrete hardware component. The disclosed methods, steps and logic blocks in the embodiments of the present disclosure may be implemented or executed by the first processor 72. The general purpose processor may be a microprocessor or any conventional processor or the like. The steps of the methods disclosed in conjunction with the embodiments of the present disclosure may be directly embodied to be executed and completed by hardware in a decoding processor, or by the combination of the hardware in the decoding processor and software modules. The software module may be located in a storage medium. The storage medium is located in the first memory 73, and the first processor 72 reads the information in the first memory 73 and completes the steps of the above methods in combination with the hardware thereof.

An embodiment of the present disclosure further provides a network device. As shown in FIG. 8, the network device includes a second communication interface 81, a second processor 82 and a second memory 83.

The second communication interface 81 is capable of exchanging information with other devices.

The second processor 82 is connected to the second communication interface 81, and is configured to perform the methods provided by one or more technical solutions at the network device side when executing a computer program. The computer program is stored on the second memory 83.

It is to be noted that the specific processing procedures of the second processor 82 and the second communication interface 81 are described in detail in the method embodiment, which will not be repeated herein.

In a practical application, the various components in the network device 80 are coupled together through a bus system 84. It is to be understood that the bus system 84 is used for implementing connection and communication between these components. The bus system 84 includes a power bus, a control bus, and a status signal bus, in addition to a data bus. However, for clarity of illustration, the various buses are designated as the bus system 84 in FIG. 8.

The second memory 83 in the embodiment of the present disclosure is used for storing various types of data to support the operations of the network device 80. Examples of such data include any computer program for operation on the network device 80.

The methods disclosed in the above embodiments of the present disclosure may be applied to or implemented by the second processor 82. The second processor 82 may be an integrated circuit chip with a signal processing capability. In the implementation, steps of the above methods can be completed by integrated logic circuit in the form of hardware in the second processor 82 or by instructions in the form of software. The second processor 82 may be a general purpose processor, a Digital Signal Processor (DSP), or other programmable logic devices, discrete gate or transistor logic devices, or a discrete hardware component. The disclosed methods, steps and logic blocks in the embodiments of the present disclosure may be implemented or executed by the second processor 82. The general purpose processor may be a microprocessor or any conventional processor or the like. The steps of the methods disclosed in conjunction with the embodiments of the present disclosure may be directly embodied to be executed and completed by hardware in a decoding processor, or by the combination of the hardware in the decoding processor and software modules. The software module may be located in a storage medium. The storage medium is located in the second memory 83, and the second processor 82 reads the information in the second memory 83 and completes the steps of the above methods in combination with the hardware thereof.

In the present disclosure, the terminal 70 and the network device 80 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general purpose processors, controllers, Micro Controller Units (MCUs), Microprocessors, or other electronic components, to perform the foregoing methods.

It is to be understood that the memory (the first memory 73 and the second memory 83) in the embodiments of the present disclosure may be a volatile memory or a non-volatile memory, and may also include both the volatile and non-volatile memories. The non-volatile memory may be a Read-Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a Flash Memory, a magnetic surface memory, an Optical Disk, or a Compact Disc Read-Only Memory (CD-ROM). The magnetic surface memory may be a magnetic disk memory or a magnetic tape memory. The volatile memory may be a Random Access Memory (RAM) which serves as an external cache. By way of illustration, but not limitation, many forms of RAM are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), a Direct Rambus Random Access Memory (DRRAM). The memory described in the embodiments of the present disclosure is intended to include, but is not limited to, these and any other suitable types of memory.

The present disclosure further provides a storage medium, i.e., a computer storage medium, specifically a computer-readable storage medium. For example, the storage medium includes a memory configured to store a computer program, and the computer program may be executed by the first processor 72 in the terminal 70 to complete the steps described in the methods at the terminal side. The computer-readable storage medium may be a memory such as an FRAM, a ROM, a PROM, an EPROM, an EEPROM, a Flash Memory, a magnetic surface memory, an optical disk, or a CD-ROM.

It is to be noted that the terms like "first", "second", etc. are used for distinguishing similar objects, and are not necessarily used to describe a specific order or sequence.

Furthermore, the technical solutions described in the embodiments of the present disclosure may be arbitrarily combined with each other as long as there is no conflict between the solutions, and within the scope of the appended claims.

The foregoing descriptions are merely preferred embodiments of the present disclosure, and are not intended to limit the scope of protection of the present disclosure. The scope of protection of the disclosure shall be subject to the scope of protection of the claims.

## Claims

1. A method for reporting Channel State Information, CSI, applied to a terminal, the method comprising:
reporting (201) a CSI report to a network device, wherein the CSI report comprises N sets of report quantities, and each of the N sets of report quantities comprises an index of at least one reference signal, and a Layer One-Reference Signal Receive Power, L1-RSRP, or a Layer One-Signal to Interference plus Noise Ratio, L1-SINR, corresponding to the at least one reference signal,
wherein N represents a number of sets of report quantities configured by the network device, and N is a positive integer,
**characterized in that** a respective slot, to which the at least one reference signal and the L1-RSRP or the L1-SINR corresponding to the at least one reference signal in each of the N sets of report quantities are to be applied, is determined based on a first periodicity configured by the network device.

2. The method of claim 1, further comprising:
quantizing a largest L1-RSRP value or a largest L1-SINR value in the N sets of report quantities into K bits; computing each of L1-RSRP values or L1-SINR values other than the largest L1-RSRP value or the largest L1-SINR value in the N sets of report quantities as a differential L1-RSRP or differential L1-SINR with a reference to the largest L1-RSRP value or the largest L1-SINR value; and quantizing the differential L1-RSRP or the differential L1-SINR into P bits,
wherein K and P are both positive integers, and K is greater than P.

3. The method of claim 2, wherein
the CSI report further comprises indication information, and the indication information indicates a position information of the largest L1-RSRP value or the largest L1-SINR value in at least one L1-RSRP or L1-SINR comprised in the N sets of report quantities.

4. The method of claim 1, further comprising:
performing, by a first Artificial Intelligence, AI, module, non-uniform quantization on L1-RSRP values or L1-SINR values corresponding to respective reference signals in the N sets of report quantities, and/or
transmitting information about the first AI module to the network device.

5. The method of claim 4, wherein
a total number of bits of non-uniform quantization of the L1-RSRP values or L1-SINR values corresponding to the respective reference signals in the N sets of report quantities is less than a first threshold.

6. The method of claim 4, further comprising:
receiving information transmitted by the network device, wherein the information comprises the CSI and/or scheduling information.

7. The method of claim 1, wherein
at least two sets of report quantities among M sets of report quantities satisfy a preset condition, and the method further comprises:
reserving a set of report quantities among the at least two sets of report quantities, and excluding, from the M sets of report quantities, other sets of report quantities than the reserved set of report quantities in the at least two sets of report quantities, to obtain the N sets of report quantities,
wherein M is a positive integer, and M is greater than N.

8. The method of claim 7, wherein
the CSI report further comprises an index of at least one reference signal in the excluded other sets of report quantities,
or,
the CSI report further comprises an L1-RSRP or an L1-SINR corresponding to at least one reference signal in the excluded other sets of report quantities.

9. The method of claim 7, wherein satisfying the preset condition comprises:
indexes of reference signals in every two sets of report quantities in the plurality of sets of report quantities being the same or partially the same;
or,
for every two sets of report quantities in the plurality of sets of report quantities, calculating a ratio between an L1-RSRP or an L1-SINR corresponding to each reference signal in one of the two sets of report quantities and an L1-RSRP or an L1-SINR corresponding to each reference signal in the other set of report quantities, to obtain a plurality of ratios, wherein each of the plurality of ratios is less than a second threshold;
or,
for every two sets of report quantities in the plurality of sets of report quantities, calculating a difference between an L1-RSRP or an L1-SINR corresponding to each reference signal in one of the two sets of report quantities and an L1-RSRP or an L1-SINR corresponding to each reference signal in the other set of report quantities, to obtain a plurality of difference values, wherein each of the plurality of difference values is less than a third threshold.

10. A method for reporting Channel State Information, CSI, applied to a network device, the method comprising:
receiving (401) a CSI report from a terminal, wherein the CSI report comprises N sets of report quantities, and each of the N sets of report quantities comprises an index of at least one reference signal, and a Layer One-Reference Signal Receive Power, L1-RSRP, or a Layer One-Signal to Interference plus Noise Ratio, L1-SINR, corresponding to the at least one reference signal,
wherein N represents a number of sets of report quantities configured by the network device, and N is a positive integer,
**characterized in that** a respective slot, to which the at least one reference signal and the L1-RSRP or the L1-SINR corresponding to the at least one reference signal in each of the N sets of report quantities are to be applied, is determined based on a first periodicity configured by the network device.

11. The method of claim 10, further comprising:
configuring the number N of the sets of report quantities and the first periodicity for the terminal.

12. The method of claim 10, wherein,
the CSI report further comprises indication information, and the indication information indicates a position information of a largest L1-RSRP value or a largest L1-SINR value in at least one L1-RSRP or L1-SINR comprised in the N sets of report quantities.

13. The method of claim 10, further comprising:
restoring, by a second Artificial Intelligence, AI, module, non-uniform quantized L1-RSRP values or L1-SINR values corresponding to respective reference signals in the N sets of report quantities, and
transmitting information to the terminal, wherein the information comprises the CSI and/or scheduling information, and/or receiving information about to a first AI module from the terminal.

14. A terminal, comprising a first processor and a first memory configured to store a computer program capable of being executed on the processor,
wherein the first processor is configured to perform operations of the method of any of claims 1 to 9 when executing the computer program.

15. A network device, comprising a second processor and a second memory configured to store a computer program capable of being executed on the processor,
wherein the second processor is configured to perform operations of the method of any of claims 10 to 13 when executing the computer program.

## Patentansprüche

1. Verfahren zum Berichten von Kanalzustandsinformationen, CSI, angewendet auf ein Endgerät, wobei das Verfahren umfasst:
Berichten (201) eines CSI-Berichts an eine Netzwerkvorrichtung, wobei der CSI-Bericht N Sätze von Berichtsgrößen umfasst und jeder der N Sätze von Berichtsgrößen einen Index von mindestens einem Referenzsignal und eine Layer-One-Referenzsignal-Empfangsleistung, L1-RSRP oder ein Layer-One-Signal-Interferenz-plus-Rausch-Verhältnis, L1-SINR entsprechend dem mindestens einen Referenzsignal umfasst,
wobei N eine Anzahl von Sätzen von Berichtsgrößen darstellt, die durch die Netzwerkvorrichtung konfiguriert sind, und N eine positive ganze Zahl ist,
**dadurch gekennzeichnet, dass** ein jeweiliger Slot, auf den das mindestens eine Referenzsignal und die L1-RSRP oder das L1-SINR entsprechend dem mindestens einen Referenzsignal in jedem der N Sätze von Berichtsgrößen angewendet werden sollen, basierend auf einer ersten Periodizität bestimmt wird, die durch die Netzwerkvorrichtung konfiguriert wird.

2. Verfahren nach Anspruch 1, ferner umfassend:
Quantisieren eines größten L1-RSRP-Werts oder eines größten L1-SINR-Werts in den N Sätzen von Berichtsgrößen in K Bits; Berechnen jedes der L1-RSRP-Werte oder L1-SINR-Werte außer dem größten L1-RSRP-Wert oder dem größten L1-SINR-Wert in den N Sätzen von Berichtsgrößen als differenzielle L1-RSRP oder differenzielles L1-SINR mit Bezug auf den größten L1-RSRP-Wert oder den größten L1-SINR-Wert; und Quantisieren der differenziellen L1-RSRP oder des differenziellen L1-SINR in P Bits,
wobei K und P beide positive ganze Zahlen sind und K größer als P ist.

3. Verfahren nach Anspruch 2, wobei
der CSI-Bericht ferner Anzeigeinformationen umfasst und die Anzeigeinformationen eine Positionsinformation des größten L1-RSRP-Werts oder des größten L1-SINR-Werts in mindestens einer L1-RSRP oder einem L1-SINR anzeigen, die bzw. das in den N Sätzen von Berichtsgrößen umfasst ist.

4. Verfahren nach Anspruch 1, ferner umfassend:
Durchführen, durch ein erstes Modul für Künstliche Intelligenz, KI, einer nicht-uniformen Quantisierung von L1-RSRP-Werten oder L1-SINR-Werten, die jeweiligen Referenzsignalen in den N Sätzen von Berichtsgrößen entsprechen, und/oder
Übertragen von Informationen über das erste KI-Modul an die Netzwerkvorrichtung.

5. Verfahren nach Anspruch 4, wobei
eine Gesamtanzahl von Bits einer nicht-uniformen Quantisierung der L1-RSRP-Werte oder L1-SINR-Werte, die den jeweiligen Referenzsignalen in den N Sätzen von Berichtsgrößen entsprechen, kleiner als ein erster Schwellenwert ist.

6. Verfahren nach Anspruch 4, ferner umfassend:
Empfangen von durch die Netzwerkvorrichtung übertragenen Informationen, wobei die Informationen die CSI und/oder Planungsinformationen umfassen.

7. Verfahren nach Anspruch 1, wobei
mindestens zwei Sätze von Berichtsgrößen unter M Sätzen von Berichtsgrößen eine voreingestellte Bedingung erfüllen und das Verfahren ferner umfasst:
Reservieren eines Satzes von Berichtsgrößen unter den mindestens zwei Sätzen von Berichtsgrößen und Ausschließen, aus den M Sätzen von Berichtsgrößen, anderer Sätze von Berichtsgrößen als des reservierten Satzes von Berichtsgrößen in den mindestens zwei Sätzen von Berichtsgrößen, um die N Sätze von Berichtsgrößen zu erhalten,
wobei M eine positive ganze Zahl ist und M größer als N ist.

8. Verfahren nach Anspruch 7, wobei
der CSI-Bericht ferner einen Index von mindestens einem Referenzsignal in den ausgeschlossenen anderen Sätzen von Berichtsgrößen umfasst,
oder
der CSI-Bericht ferner eine L1-RSRP oder einen L1-SINR entsprechend mindestens einem Referenzsignal in den ausgeschlossenen anderen Sätzen von Berichtsgrößen umfasst.

9. Verfahren nach Anspruch 7, wobei das Erfüllen der voreingestellten Bedingung umfasst:
Indizes von Referenzsignalen in jeweils zwei Sätzen von Berichtsgrößen in der Vielzahl von Sätzen von Berichtsgrößen, die gleich oder teilweise gleich sind;
oder
für jeweils zwei Sätze von Berichtsgrößen in der Vielzahl von Sätzen von Berichtsgrößen, Berechnen eines Verhältnisses zwischen einer L1-RSRP oder einem L1-SINR entsprechend jedem Referenzsignal in einem der zwei Sätze von Berichtsgrößen und einer L1-RSRP oder einem L1-SINR entsprechend jedem Referenzsignal in dem anderen Satz von Berichtsgrößen, um eine Vielzahl von Verhältnissen zu erhalten, wobei jedes aus der Vielzahl von Verhältnissen kleiner als ein zweiter Schwellenwert ist;
oder
für jeweils zwei Sätze von Berichtsgrößen in der Vielzahl von Sätzen von Berichtsgrößen, Berechnen einer Differenz zwischen einer L1-RSRP oder einem L1-SINR entsprechend jedem Referenzsignal in einem der zwei Sätze von Berichtsgrößen und einer L1-RSRP oder einem L1-SINR entsprechend jedem Referenzsignal in dem anderen Satz von Berichtsgrößen, um eine Vielzahl von Differenzwerten zu erhalten, wobei jeder aus der Vielzahl von Differenzwerten kleiner als ein dritter Schwellenwert ist.

10. Verfahren zum Berichten von Kanalzustandsinformationen, CSI, angewendet auf eine Netzwerkvorrichtung, wobei das Verfahren umfasst:
Empfangen (401) eines CSI-Berichts von einem Endgerät, wobei der CSI-Bericht N Sätze von Berichtsgrößen umfasst und jeder der N Sätze von Berichtsgrößen einen Index von mindestens einem Referenzsignal und eine Layer-One-Referenzsignal-Empfangsleistung, L1-RSRP oder ein Layer-One-Signal-Interferenz-plus-Rausch-Verhältnis, L1-SINR entsprechend dem mindestens einen Referenzsignal umfasst,
wobei N eine Anzahl von Sätzen von Berichtsgrößen darstellt, die durch die Netzwerkvorrichtung konfiguriert sind, und N eine positive ganze Zahl ist,
**dadurch gekennzeichnet, dass** ein jeweiliger Slot, auf den das mindestens eine Referenzsignal und die L1-RSRP oder das L1-SINR entsprechend dem mindestens einen Referenzsignal in jedem der N Sätze von Berichtsgrößen angewendet werden sollen, basierend auf einer ersten Periodizität bestimmt wird, die durch die Netzwerkvorrichtung konfiguriert wird.

11. Verfahren nach Anspruch 10, ferner umfassend:
Konfigurieren der Anzahl N der Sätze von Berichtsgrößen und der ersten Periodizität für das Endgerät.

12. Verfahren nach Anspruch 10, wobei
der CSI-Bericht ferner Anzeigeinformationen umfasst, und die Anzeigeinformationen eine Positionsinformation eines größten L1-RSRP-Werts oder eines größten L1-SINR-Werts in mindestens einer L1-RSRP oder einem L1-SINR anzeigen, die bzw. das in den N Sätzen von Berichtsgrößen umfasst ist.

13. Verfahren nach Anspruch 10, ferner umfassend:
Wiederherstellen, durch ein zweites Modul für Künstliche Intelligenz, KI, von nicht-uniformen quantisierten L1-RSRP-Werten oder L1-SINR-Werten, die jeweiligen Referenzsignalen in den N Sätzen von Berichtsgrößen entsprechen, und
Übertragen von Informationen an das Endgerät, wobei die Informationen die CSI und/oder Planungsinformationen umfassen, und/oder Empfangen von Informationen über ein erstes KI-Modul von dem Endgerät.

14. Endgerät, umfassend einen ersten Prozessor und einen ersten Speicher, der konfiguriert ist, um ein Computerprogramm zu speichern, das auf dem Prozessor ausgeführt werden kann,
wobei der erste Prozessor konfiguriert ist, um Operationen des Verfahrens nach einem der Ansprüche 1 bis 9 durchzuführen, wenn er das Computerprogramm ausführt.

15. Netzwerkvorrichtung, umfassend einen zweiten Prozessor und einen zweiten Speicher, der konfiguriert ist, um ein Computerprogramm zu speichern, das auf dem Prozessor ausgeführt werden kann,
wobei der zweite Prozessor konfiguriert ist, um Operationen des Verfahrens nach einem der Ansprüche 10 bis 13 durchzuführen, wenn er das Computerprogramm ausführt.

## Revendications

1. Procédé de rapport d'informations d'état de canal, CSI, appliqué à un terminal, le procédé comprenant :
le fait de rapporter (201) un rapport CSI à un dispositif de réseau, dans lequel le rapport CSI comprend N ensembles de quantités de rapports, et chacun des N ensembles de quantités de rapports comprend un indice d'au moins un signal de référence, et une puissance de réception de signal de référence de couche un, L1-RSRP, ou un rapport signal sur interférence plus bruit de couche un, L1-SINR, correspondant à l'au moins un signal de référence,
dans lequel N représente un nombre d'ensembles de quantités de rapports configurés par le dispositif de réseau, et N est un nombre entier positif,
**caractérisé en ce qu'**un créneau respectif, auquel l'au moins un signal de référence et la L1-RSRP ou le L1-SINR correspondant à l'au moins un signal de référence dans chacun des N ensembles de quantités de rapports doivent être appliqués, est déterminé sur la base d'une première périodicité configurée par le dispositif de réseau.

2. Procédé selon la revendication 1, comprenant en outre :
la quantification d'une valeur L1-RSRP la plus élevée ou d'une valeur L1-SINR la plus élevée dans les N ensembles de quantités de rapports en K bits ; le calcul de chacune des valeurs L1-RSRP ou des valeurs L1-SINR autres que la plus grande valeur L1-RSRP ou la plus grande valeur L1-SINR dans les N ensembles de quantités de rapports en tant que L1-RSRP différentielle ou L1-SINR différentiel avec une référence à la plus grande valeur L1-RSRP ou à la plus grande valeur L1-SINR ; et la quantification de la L1-RSRP différentielle ou du L1-SINR différentiel en P bits,
dans lequel K et P sont tous deux des nombres entiers positifs, et K est supérieur à P.

3. Procédé selon la revendication 2, dans lequel
le rapport CSI comprend en outre des informations d'indication, et les informations d'indication indiquent des informations de position de la plus grande valeur L1-RSRP ou de la plus grande valeur L1-SINR dans au moins une L1-RSRP ou un L1-SINR compris dans les N ensembles de quantités de rapports.

4. Procédé selon la revendication 1, comprenant en outre :
la réalisation, par un premier module d'intelligence artificielle, IA, d'une quantification hétérogène sur des valeurs L1-RSRP ou des valeurs L1-SINR correspondant à des signaux de référence respectifs dans les N ensembles de quantités de rapports, et/ou
la transmission d'informations concernant le premier module d'lA au dispositif de réseau.

5. Procédé selon la revendication 4, dans lequel
un nombre total de bits de quantification hétérogène des valeurs L1-RSRP ou des valeurs L1-SINR correspondant aux signaux de référence respectifs dans les N ensembles de quantités de rapports est inférieur à un premier seuil.

6. Procédé selon la revendication 4, comprenant en outre :
la réception d'informations transmises par le dispositif de réseau, dans lequel les informations comprennent les CSI et/ou des informations de planification.

7. Procédé selon la revendication 1, dans lequel
au moins deux ensembles de quantités de rapports parmi M ensembles de quantités de rapports satisfont à une condition prédéfinie, et le procédé comprend en outre :
la réservation d'un ensemble de quantités de rapports parmi au moins deux ensembles de quantités de rapports, et l'exclusion, des M ensembles de quantités de rapports, d'autres ensembles de quantités de rapports que l'ensemble réservé de quantités de rapports dans au moins deux ensembles de quantités de rapports, afin d'obtenir les N ensembles de quantités de rapports, dans lequel M est un nombre entier positif, et M est supérieur à N.

8. Procédé selon la revendication 7, dans lequel
le rapport CSI comprend en outre un indice d'au moins un signal de référence dans les autres ensembles de quantités de rapports exclus,
ou,
le rapport CSI comprend en outre une L1-RSRP ou un L1-SINR correspondant à au moins un signal de référence dans les autres ensembles de quantités de rapports exclus.

9. Procédé selon la revendication 7, dans lequel la satisfaction à la condition prédéfinie comprend :
des indices de signaux de référence dans tous les deux ensembles de quantités de rapports dans la pluralité d'ensembles de quantités de rapports étant identiques ou partiellement identiques ;
ou,
pour chaque ensemble de deux ensembles de quantités de rapports dans la pluralité d'ensembles de quantités de rapports, le calcul d'un rapport entre une L1-RSRP ou un L1-SINR correspondant à chaque signal de référence dans l'un des deux ensembles de quantités de rapports et une L1-RSRP ou un L1-SINR correspondant à chaque signal de référence dans l'autre ensemble de quantités de rapports, pour obtenir une pluralité de rapports, dans lequel chacun de la pluralité de rapports est inférieur à un deuxième seuil ;
ou,
pour chaque ensemble de deux ensembles de quantités de rapports dans la pluralité d'ensembles de quantités de rapports, le calcul d'une différence entre une L1-RSRP ou un L1-SINR correspondant à chaque signal de référence dans l'un des deux ensembles de quantités de rapports et une L1-RSRP ou un L1-SINR correspondant à chaque signal de référence dans l'autre ensemble de quantités de rapports, pour obtenir une pluralité de valeurs de différence, dans lequel chacune de la pluralité de valeurs de différence est inférieure à un troisième seuil.

10. Procédé de rapport d'informations d'état de canal, CSI, appliqué à un dispositif de réseau, le procédé comprenant :
la réception (401) d'un rapport CSI en provenance d'un terminal, dans lequel le rapport CSI comprend N ensembles de quantités de rapports, et chacun des N ensembles de quantités de rapports comprend un indice d'au moins un signal de référence, et une puissance de réception de signal de référence de couche un, L1-RSRP, un rapport signal sur interférence plus bruit de couche un, L1-SINR, correspondant à l'au moins un signal de référence,
dans lequel N représente un nombre d'ensembles de quantités de rapports configurés par le dispositif de réseau, et N est un nombre entier positif,
**caractérisé en ce qu'**un créneau respectif, auquel l'au moins un signal de référence et la L1-RSRP ou le L1-SINR correspondant à l'au moins un signal de référence dans chacun des N ensembles de quantités de rapports doivent être appliqués, est déterminé sur la base d'une première périodicité configurée par le dispositif de réseau.

11. Procédé selon la revendication 10, comprenant en outre :
la configuration du nombre N des ensembles de quantités de rapports et de la première périodicité pour le terminal.

12. Procédé selon la revendication 10, dans lequel
le rapport CSI comprend en outre des informations d'indication, et les informations d'indication indiquent des informations de position de la plus grande valeur L1-RSRP ou de la plus grande valeur L1-SINR dans au moins une L1-RSRP ou un L1-SINR compris dans les N ensembles de quantités de rapports.

13. Procédé selon la revendication 10, comprenant en outre :
la réalisation, par un second module d'intelligence artificielle, IA, de valeurs L1-RSRP ou L1-SINR quantifiées hétérogènes correspondant à des signaux de référence respectifs dans les N ensembles de quantités de rapports, et
la transmission d'informations au terminal, dans lequel les informations comprennent les CSI et/ou des informations de planification, et/ou la réception d'informations relatives à un premier module d'lA en provenance du terminal.

14. Terminal, comprenant un premier processeur et une première mémoire configurée pour stocker un programme informatique capable d'être exécuté sur le processeur,
dans lequel le premier processeur est pour réaliser des opérations du procédé selon l'une quelconque des revendications 1 à 9 lors de l'exécution du programme informatique.

15. Dispositif de réseau, comprenant un second processeur et une seconde mémoire configurée pour stocker un programme informatique capable d'être exécuté sur le processeur,
dans lequel le second processeur est configuré pour réaliser des opérations du procédé selon l'une quelconque des revendications 10 à 13 lors de l'exécution du programme informatique.
